# EUROPEAN PATENT SPECIFICATION

(11) **EP 2 677 198 B1**
(45) Date of publication and mention of the grant of the patent: **04.04.2018**
(21) Application number: 12710433.9
(22) Date of filing: 02.02.2012
(51) Int. Cl.: F16H 15/38, F16H 63/06

(54) **TOROIDAL CONTINUOUSLY VARIABLE TRANSMISSION**
STUFENLOSES TORSIONSGETRIEBE
TRANSMISSION À VARIATION CONTINUE TOROÏDALE

(30) Priority: 03.02.2011 JP 2011021299; 25.02.2011 JP 2011039748; 25.02.2011 JP 2011039749; 28.02.2011 JP 2011042238; 23.05.2011 JP 2011114912
(43) Date of publication of application: 25.12.2013
(73) Proprietor: NSK Ltd., Tokyo 141-8560 (JP)
(72) Inventor: NOJI, Sachiko, Kanagawa 251-8501 (JP); INOUE, Tomohiro, Kanagawa 251-8501 (JP); NISHII, Hiroki, Kanagawa 251-8501 (JP); YAMAGUCHI, Tomomi, Kanagawa 251-8501 (JP); TOYODA, Toshiro, Kanagawa 251-8501 (JP); KISHIDA, Hirotaka, Kanagawa 251-8501 (JP)
(74) Representative: Moreland, David
(86) International application number: PCT/JP2012/052432
(87) International publication number: WO 2012/105663

(56) References cited:
- JP-A- 7 248 049
- JP-A- 2001 227 611
- JP-A- 2008 025 821
- JP-A- 2013 104 519
- US-A1- 2008 009 387

## Description

### TECHNICAL FIELD

The present invention relates to a half toroidal continuously variable transmission that is used as an automatic transmission.

### BACKGROUND ART

Half toroidal continuously variable transmissions are already widely used as transmissions for automobiles for example, and construction of such a transmission is disclosed in JP2003-214516(A), JP2007-315595(A), JP2008-25821(A) and JP2008-275088(A). Moreover, construction for increasing the adjustable range of transmission ratios by combining a toroidal continuously variable transmission with a planetary gear mechanism is known and disclosed in JP2004-169719(A), JP2009-30749(A) and JP2006-283800(A). FIG. 28 and FIG. 29 illustrate a first example of a conventional toroidal continuously variable transmission. In this toroidal continuously variable transmission, a pair of input disks 2 are supported around the portions near both ends of an input rotating shaft 1, such that the inside surfaces, which are toroid surfaces face each other and so that they rotate in synchronization with the input rotating shaft 1. An output cylinder 3 is supported around the middle section of the input rotating shaft 1 such that it rotates with respect to the input rotating shaft 1. An output gear 4 is provided around the outer circumferential surface of the output cylinder 3 in the center section in the axial direction, and a pair of output disks 5 is supported by both end sections in the axial direction by way of a spline fit such that they can freely rotate in synchronization with the output gear 4. In this state, the inside surfaces of the output disks 5, which are toroid surfaces, face the inside surfaces of the input disks 2,

Between the input disks 2 and output disks 5 there is a plurality of power rollers 6 that have spherical convex peripheral surfaces. These power rollers 6 are supported by trunnions 7 such that they can rotate freely, and these trunnions 7 are supported by a support plate 10 so that they can freely pivot and displace around the center axis of tilt shafts 8 which are positioned in a torsional position with respect to the center axis of the input disk 2 and output disk 5. In other words, each of these trunnions 7 is provided with the tilt shafts 8 that are concentric on both ends thereof, and a support beam section 9 that exists between the tilt shafts 8, such that these tilt shafts 8 are pivotally supported with respect to the support plate 10 by way of radial needle roller bearings 11.

Each of the power rollers 6 is supported by the inside surface of the support beam section 9 of the trunnion 7 by way of a support shaft 12, of which a base side half section and a tip side half section are eccentric with each other, and a plurality of rolling bearings such that the power roller 6 can freely rotate around the tip side half section of the support shaft 12, and can freely pivot a little around the base side half section of the support shaft 12. Between the outside surface of each power roller 6 and the inside surface of the support beam section 9 of the trunnion 7 there is a thrust ball bearing 13 and a thrust needle roller bearing 14 in that order from the side of the power roller 6, and these bearings form a plurality of rolling bearings. The thrust ball bearing 13 allows rotation of the power roller 6 while supporting a load in the thrust direction that is applied to the power roller 6. In the thrust ball bearing 13 there is a plurality of balls 18 that are held between an inner raceway 15 that is formed on the outside surface of the power roller 6 and an outer raceway 17 that is formed on the inside surface of an outer ring 16 such that they can roll freely. On the other hand, the thrust needle roller bearing 14 allows the outer ring 16 and tip side half section of the support shaft 12 to oscillate around the center of the base side half section, while supporting a thrust load that is applied from the power roller 6 to the outer ring 16 of the thrust ball bearing 13. The outer ring 16 and the support shaft 12 of the thrust ball bearing 13 are formed separately, however, they could be integrally formed.

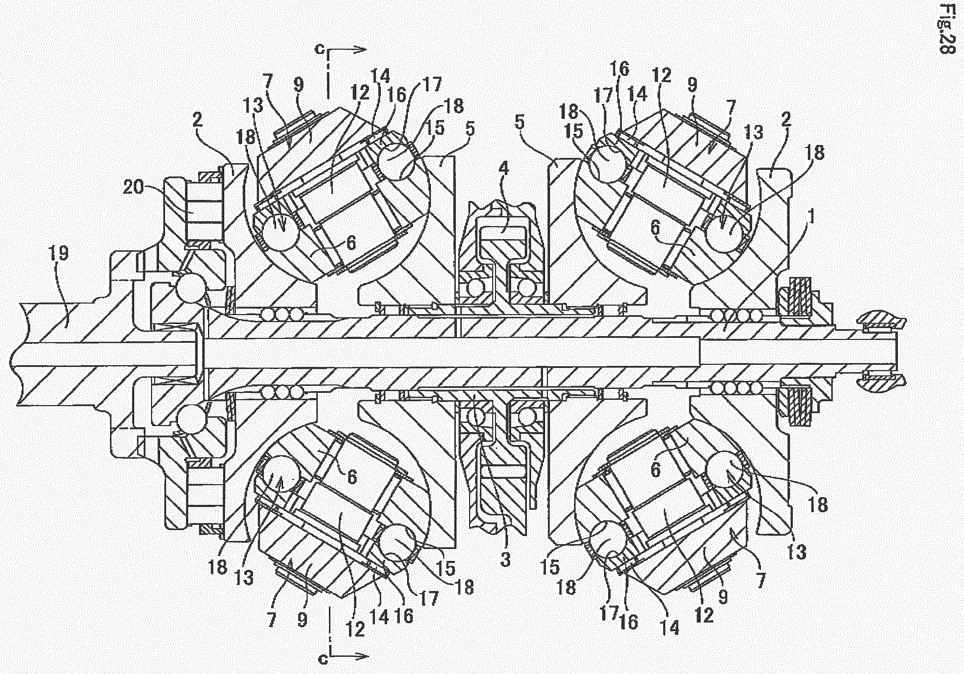

During operation of this toroidal continuously variable transmission, a drive shaft 19 rotates and drives one of the input disks 2 (left input disk in FIG. 28) by way of a rotating cam type pressure apparatus 20. As a result, the pair of input disks 2 that are supported by both end of the input rotating shaft 1 rotate in synchronization while being pressed toward each other. This rotation is transmitted to the output disks 5 by way of the power rollers 6, and output from the output gear 4. When changing the transmission ratio between the input rotating shaft 1 and the output gear 4, a hydraulic actuator 21 causes the trunnion 7 to displace in the axial direction of the tilt shaft 8. As a result, the direction of the force in the tangential direction that acts on the area of rolling contact (traction area) between the peripheral surface of the power roller 6 and the inside surface of the input disk 2 and the inside surface of the output disk 5 changes (side slipping occurs at the area rolling contact). As the direction of this force changes, the trunnion 7 oscillates around its own tilt shafts 8, and the position of contact between the peripheral surface of the power roller 6 and the inside surfaces of the input disk 2 and the output disk 5 changes. When the peripheral surface of the power roller 6 comes in rolling contact with the portion of the inside surface of the input disk 2 near the outside in the radial direction, and the portion of the inside surface of the output disk 5 near the inside in the radial direction, the transmission ratio between the input rotating shaft 1 and the output gear 4 is on the speed increasing side, and when the peripheral surface of the power roller 6 comes in rolling contact with the portion of the inside surface of the input disk 2 near the inside in the radial direction, and the portion of the inside surface of the output disk 5 near the outside in the radial direction, the transmission ratio between the input rotating shaft 1 and the output gear 4 is on the speed reduction side.

In either case where a toroidal continuously variable gear is solely used or case where it is installed in a continuously variable transmission in combination with a planetary gear mechanism, when adjusting the transmission ratio, generally, as described above, a hydraulic actuator 21 causes the trunnion 7 to displace in the axial direction of the tilt shaft 8. A mechanism for adjusting the transmission ratio to a desired value and maintaining the gear ratio at that adjusted value is disclosed in JP2006-283800(A). As illustrated in FIG. 30, this mechanism comprises a transmission ratio control valve 46, a stepping motor 47 and a precess cam 48. The transmission ratio control valve 46 is a combination of a spool 49 and a sleeve 50 that are able to displace in the axial direction relative to each other, and based on the relative displacement of the spool 49 and sleeve 50, the hydraulic source 51 and hydraulic chambers 52a, 52B of the actuator 21 are switched between the supply/discharge state. The spool 49 and sleeve 50 displace relative to each other by the movement of one of the trunnions 7 and the stepping motor 47.

The supply or discharge of hydraulic oil to the actuator 21 of each trunnion 7 is not independently controlled for each actuator 21, but is controlled by the movement of one of the trunnions 7. In other words, the displacement of the trunnion 7 in the axial direction of tilt shaft 80 and the pivotal displacement around the tilt shaft 8 is transmitted to the spool 49 by way of a precess cam 48 and link arm 54 that are connected to the tilt shaft 8 by a rod 53. Furthermore, this causes the spool 49 to displace in the axial direction, and the stepping motor 47 causes the sleeve 50 to displace in the axial direction. Supplying or discharging hydraulic oil to/from the hydraulic chambers 52a, 52b of the actuator 21 is performed by a single transmission ratio control valve 46.

When adjusting the transmission ratio of a toroidal continuously variable transmission, the stepping motor 47 causes the sleeve 50 to displace to a specified position, and open the transmission ratio control valve 46 in a specified direction. By doing so, hydraulic oil is supplied to or discharged from the hydraulic chambers 52a, 52b of the actuators 21 of the trunnions 7, and these actuators 21 cause the respective trunnions 7 to displace in the axial direction of tilt shafts 8. As a result, the traction area of each of the power rollers 6 that are supported by these trunnions 7 shifts from the neutral position, and the transmission ratio starts to change. In this way, at the instant when each of the traction areas shift from the neutral position and the transmission ratio begins to change, the opened/closed state of the transmission ratio control valve 46 switches to the other direction from the specified direction as the trunnions 7 displace in the axial direction. Therefore, as soon as pivotal displacement begins in order to change the speed, the trunnions 7 begin to move (return) to the neutral position in the axial direction. When the transmission ratio has reached the desired value, at the same time that the traction area returns to the neutral position, the transmission ratio control value 46 is closed. As a result, the transmission ratio of the toroidal continuously variable transmission is maintained at the desired value (feedback control).

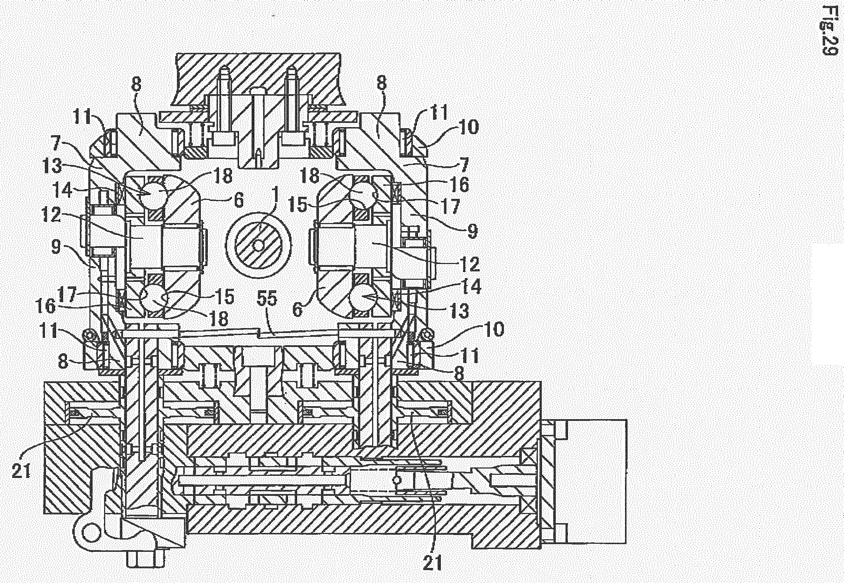

In this way, synchronization of the tilt angle of the trunnions7 that is related to the transmission ratio between the input disks 2 and output disks 5 is performed by the hydraulic actuator 21. Even when the tilt angles of the trunnions 7 shift a little, by the forces acting at the traction areas, or in other words, by the tilt of the trunnions 7 in a direction that the forces in the tangential directions that act at these traction areas become a minimum, the tilt angles of other trunnions 7 follow the tilt angle of the trunnion 7 in which the precess cam 48 is installed. Furthermore, for safety, running a synchronization cable 55 between trunnions 7 (FIG. 29), and performing mechanical synchronization of the tilt angles of these trunnions 7 is also known.

When operating this kind of toroidal continuously variable transmission, the members that are provided for transmitting power, or in other words, the input disks 2, output disk 5 and power rollers 6 elastically deform according to pressure that is generated by the pressure apparatus 20. The input disks 2 and the output disks 5 displace in the axial direction due to this elastic deformation. Moreover, the pressure force that is generated by the pressure apparatus 20 become larger the larger the torque is that is transmitted to by the toroidal continuously variable transmission, which causes the amount of elastic deformation of the input disks, output disks 5 and power rollers 6 to also increase. Therefore, in order to properly maintain a state of contact between the inner surfaces of the input disks and output disks 5 and the peripheral surfaces of the power rollers 6, regardless of fluctuation in the torque, a mechanism is necessary for causing the power rollers 6 to displace with respect to the trunnions 7 in the axial direction of the input disks 2 and the output disks 5. In the case of the first example of conventional construction, by causing the tip side half section of the support shaft 12 that supports the power roller 6 to oscillate and displace around the center of the base side half section of the support shaft 12, the power roller 6 is caused to displace in the axial direction.

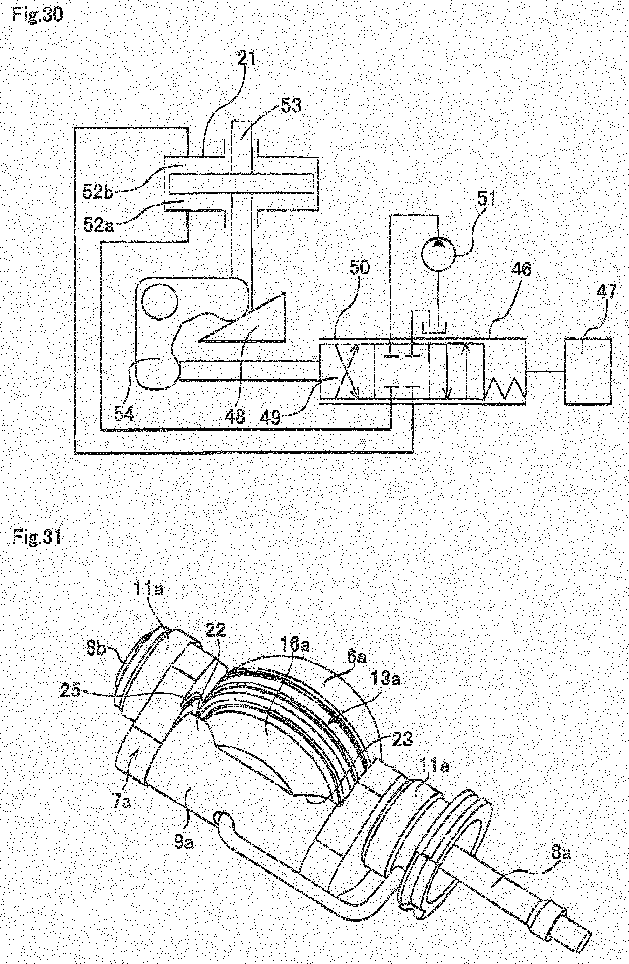

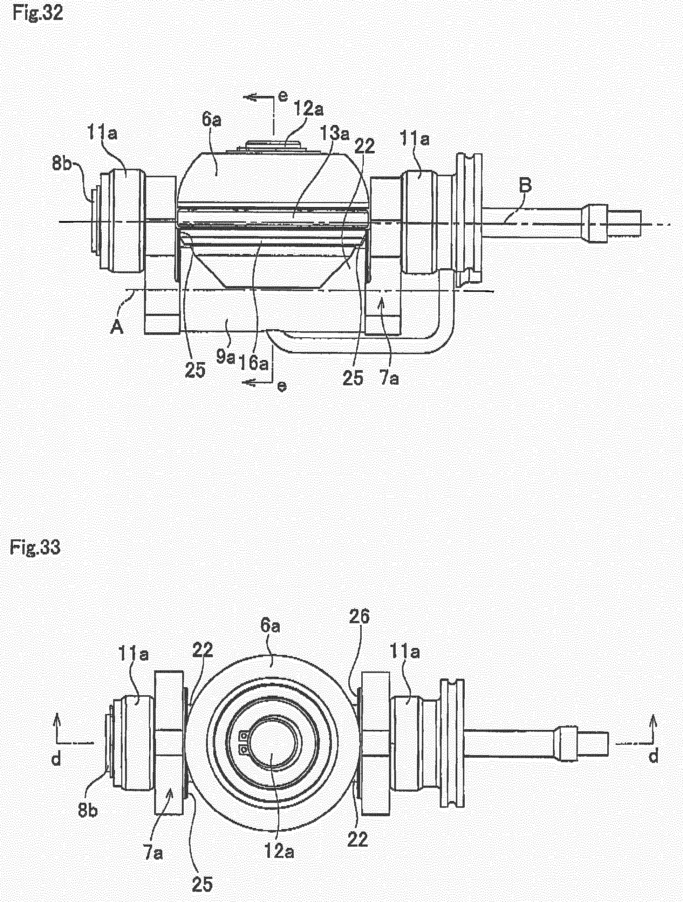

In the case of the first example of conventional construction, the construction of causing the power rollers 6 to displace in the axial direction is complex, the manufacturing, management and assembly work of parts is troublesome and the cost is high. In order to solve these kinds of problems, construction such as illustrated in FIG. 31 to FIG. 36 is disclosed in JP2008-25821(A). The trunnion 7a of this second example of conventional construction comprises a pair of concentric tilt shafts 8a, 8b that are provided on both ends of the trunnion 7a, and a support beam 9a that is located between these tilt shafts 8a, 8b and that has a cylindrical convex surface 22 formed on the inside surface in the radial direction of at least the input disk 2 and output disk 5 (up/down direction in FIG. 32, FIG 35 and FIG. 36). The tilt shafts 8a, 8b are pivotally supported by a support plate 10 by way of radial needle roller bearings 11a (FIG. 29).

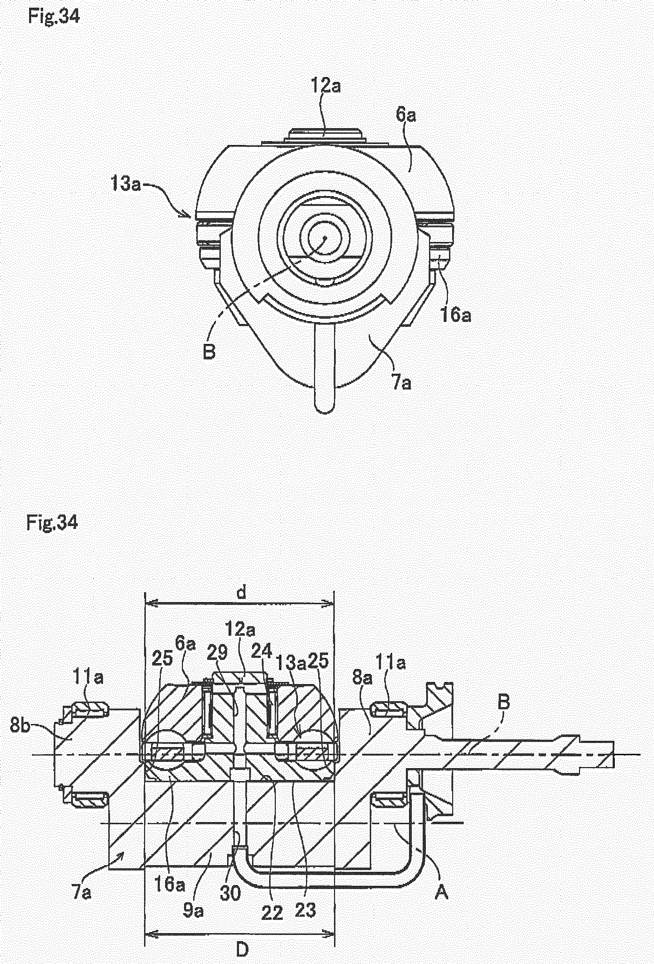

As illustrated in FIG. 32 and FIG. 35, the center axis A of the cylindrical shaped convex section 22 is parallel with the center axis B of the tilt shafts 8a, 8b, and exists further on the outside in the radial direction of the input disk 2 and output disk 5 (bottom side in FIG. 32, FIG 35 and FIG. 36) than the center axis B of these tilt shafts 8a, 8b. Moreover, a partial cylindrical surface shaped concave section 23 is provided on the outside surface of the outer ring 16a of a thrust ball bearing 13a that is provided between the support beam section 9a and the outside surface of the power roller 6 such that it is traverses the outside surface in the radial direction of the outer ring 16a. The concave section 23 fits with the cylindrical shaped convex surface 22 of the support beam section 9a, and therefore the outer ring 16 is supported by the trunnion 7a so that pivotal displacement is possible in the axial direction of the input disk 2 and the output disk 5.

The support shaft 12a is fastened to the center section on the inside surface of the outer ring 16a so as to be integrated with the outer ring 16a, and the power roller 6 is supported around the support shaft 12a by way of a radial needle roller bearing 24. Furthermore, a pair of stepped surfaces 25 are formed on the inside surface of the trunnion 7a in the connecting sections between both end sections of the support beam section 9a and the pair of tilt shafts 8a, 8b such that they face each other. These stepped sections 25 come in contact with or closely face the outer circumferential surface of the outer ring 16a of the thrust ball bearing 13a, and the traction force that is applied to the outer ring 16 from the power roller 6a can be supported by one of the stepped surfaces 25.

With the toroidal continuously variable transmission of this second example of conventional construction, low cost and simple construction is possible in which the power roller 6a is displaced in the axial direction of the inside disk 2 and outside disk 5, and regardless of the change in the elastic deformation of the component members, the contact state between the peripheral surface of the power roller 6a and the input disk 2 and output disk 5 can be properly maintained. In other words, during operation of the toroidal continuously variable transmission, when it is necessary to cause the power roller 6a to displace in the axial direction of the input disk 2 and output disk 5 due to elastic deformation of the input disk 2, output disk 5 and power roller 6a, the outer ring 16a of the thrust ball bearing 13a that supports the power roller 6a such that it can rotate freely pivotally displaces around the center axis A of the cylindrical convex surface 22, while contact surfaces of the partial cylindrical concave section 23 that is formed on the outside surface of the outer ring 16a, and the cylindrical convex surface 22 of the support beam section 9a slide. Due to this pivotal displacement, the portion of the peripheral surface of the power roller 6a that comes in rolling contact with the surfaces on one side in the axial direction of the input disk 2 and the output disk 5 displaces in the axial direction of these disks 2, 5, and the contact state is properly maintained.

The center axis A of the cylindrical shaped convex surface 22 is located further toward the outside in the radial direction of the input disk 2 and output disk 5 than the center axis B of the tilt shafts 8a, 8b, which is the pivot center of the trunnion 7a during speed change operation. Therefore, the radius of pivotal displacement around the center axis A of the cylindrical convex surface 22 is greater than the pivot radius during speed change operation, and the effect on the fluctuation of the transmission ratio between the input disk 2 and output disk 5 is within a range that can be ignored or easily corrected.

In the case of the second example of conventional construction, the manufacturing, management and assembly work of parts is easier than in the first example of conventional construction, and the cost reduction becomes easier, however, from the aspect of stabilizing the speed change operation, there is room for improvement. The reason for this is, that in order to smoothly perform pivotal displacement of the outer ring 16a around the support beam section 9a, the space D between the pair of stepped surfaces 25 that are formed on both end sections of the support beam section 9a is a little greater than the outer diameter d of the outer ring 16a (D > d). The outer ring 16a and the power roller 6a that is supported such that it is concentric with the other race 16a can displace in the axial direction of the support beam section 9a by the amount of the difference between the space D and the outer diameter d (D - d).

On the other hand, during operation of a vehicle in which a toroidal continuously variable transmission is installed, a force (in the field of toroidal continuously variable transmissions, this is called "2Ft") is applied in opposite directions to the power roller 6a from the input disk 2 and output disk 5 during acceleration and deceleration (during an engine brake). Due to this force 2Ft, the power roller 6a displaces in the axial direction of the support beam section 9a together with the outer ring 16a. The direction of this displacement is the same as the direction of displacement of the trunnion 7 by the actuator 21 (FIG. 29), and even when the amount of displacement is about 0.1 mm, there is a possibility that speed change operation will begin. When speed change operation begins due to such a cause, the speed change operation is not directly related to the driving operation of the vehicle, and even when corrected, gives an uncomfortable feeling to the driver. Particularly, when this kind of speed change operation that is not intended by the driver is performed in a state where the torque that is transmitted by the toroidal continuously variable transmission is low, it become easy for the driver to receive a strange or uncomfortable feeling.

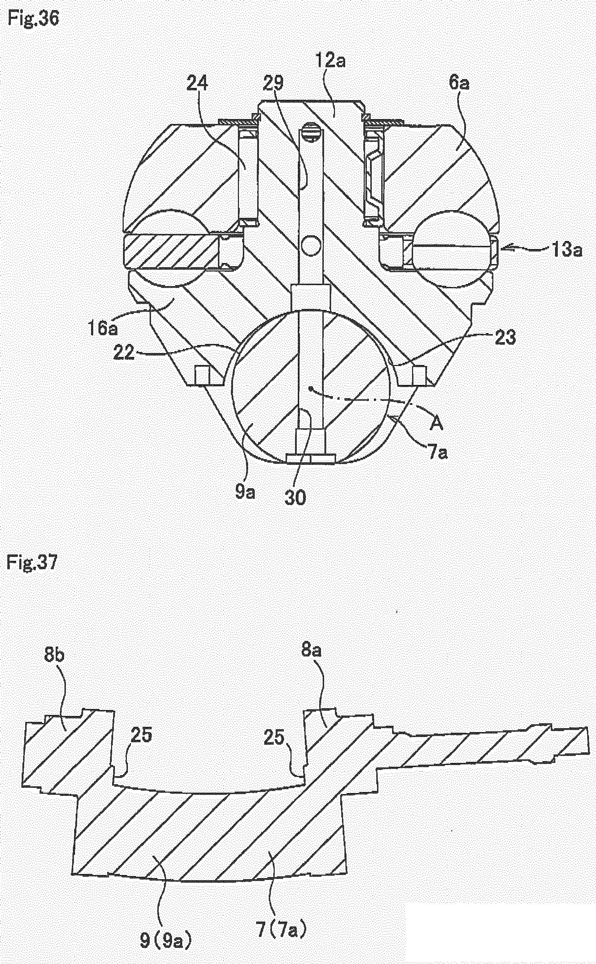

In order to suppress the occurrence of this kind of speed change operation that is not directly related to the driving operation, suppressing the difference between the space D and outer diameter d (D - d) to an insignificant amount (for example, tens of µm) may be possible, However, during operation of a half-toroidal continuously variable transmission, due to a thrust load that is applied from the traction area to the support beam section 9a by way of the power roller 6a and outer ring 16a, the trunnion 7a, as exaggeratingly illustrated in FIG. 37, elastically deforms in a direction such that the side were the outer ring 16a is arranged becomes concave. As a result of this elastic deformation, the space between the pair of stepped surfaces 25 for each trunnion 7a is reduced. In this kind of state as well, in order that the space D between these stepped surfaces 25 does not become less than the outer diameter d of the outer ring 16a, it is necessary to keep the difference between this space D and the outer diameter d in the normal state (state in which there is no elastic deformation of the trunnion 7a). As a result, is becomes particularly easy for the uncomfortable feeling to become large, and during low torque operation, it becomes easy for speed change operation that is not directly related to the driving operation as described above to occur.

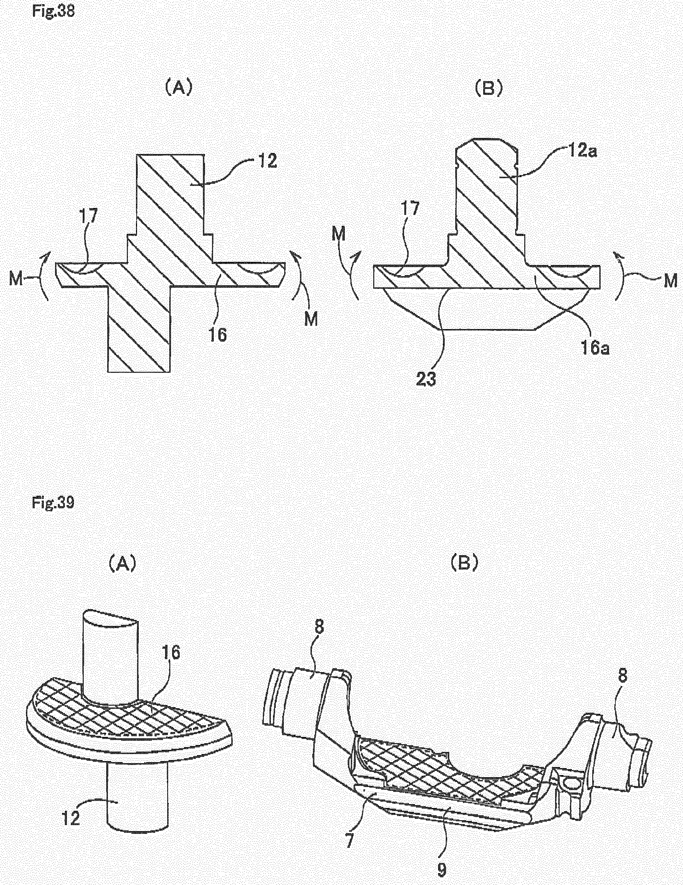

As described above, when the support beam section 9a of the trunnion 7a elastically deforms in a direction such that the inside surface becomes a concave surface, a moment M in the direction indicated by the arrow in FIG. 38B is applied from the inside surface of the support beam section 9a to the outer ring 16a. As illustrated in FIG. 38A, in the case of the first example of conventional construction, the outer ring 16 is formed into a flat plate shape having little overall change in the thickness, and the outer ring 16a has low rigidity with respect to the moment M. Therefore, during operation of the toroidal continuously variable transmission, the inside surface of the support beam section 9 and the outside surface of outer ring 16 are pressed together by way of the thrust needle roller bearing 14 over a wide range as illustrated by the grid lines in FIG. 39A and FIG. 39B. As a result, it is possible to keep the contact pressure applied to the inside surface of the support beam section 9 and the outside surface of the outer ring 16 low, and it becomes easy to maintain the durability of the support beam section 9 and the outer ring 16.

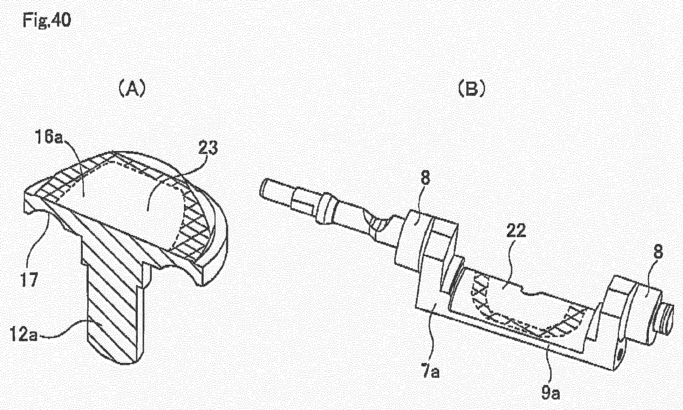

On the other hand, in the case of the second example of conventional construction, the outer ring 16a is shaped such that thickness of both end sections in the curved direction of the concave section 23 (front/rear direction in FIG. 32, FIG. 35 and FIG. 38B, or the left and right direction in FIG. 36) is sufficiently larger than the thickness in the center section in the curved direction of the concave section 23. Therefore, the bending rigidity of the outer ring 16a against a moment M becomes sufficiently large. Consequently, even when such a moment M is applied, the outer ring 16a does not elastically deform much in the direction that follows the inside surface of the support beam section 9a. Therefore, during operation of the toroidal continuously variable transmission, the cylindrical convex surface 22 that is formed on the outside surface of the support beam section 9a, and the concave 23 that is formed on the outside surface of the outer ring 16a are in a state pressing against each other in a narrow ring shaped range that corresponds to the outer perimeter edge of the concave section 23 as illustrated the grid lines in FIG. 40A and FIG. 40B. As a result, the contact pressure that is applied at the area of contact between the cylindrical convex surface 22 and the concave section 23 becomes high, and that become a cause of making it difficult to maintain the durability of the support beam section 9a and the outer ring 16a.

JP2008-25821(A) discloses construction wherein the force 2Ft is supported by causing an anchor piece that is fastened to part of the cylindrical convex surface that is formed on the support beam section side to engage with an anchor groove that is formed on the inner surface of the concave section of the outer ring side. Moreover, construction is disclosed wherein a plurality of balls are placed between rolling grooves that have a circular arc shaped cross section, and that are formed on the portions of the cylindrical convex surface and concave surface that are aligned with each other. However, in the former construction, it is difficult to support and fasten the anchor piece by the support beam section such that strength and rigidity capable of supporting the force 2Ft, and it is difficult to lower cost and maintain sufficient reliability. Moreover, in the case of the latter construction, the force 2Ft becomes large, and as the contact pressure at the areas of rolling contact between the rolling surfaces of the balls and the rolling grooves increases, an indentation is formed on the inner surface of the rolling grooves, there is a possibility that vibration will occur when the inner ring pivotally displaces with respect to the trunnion.

### [Related Literature]

### [Patent Literature]

- [Patent Literature 1]: JP2003-214516(A)
- [Patent Literature 2]: JP2007-315595(A)
- [Patent Literature 3]: JP2008-25821(A)
- [Patent Literature 4]: JP2008-275088(A)
- [Patent Literature 5]: JP2004-169719(A)
- [Patent Literature 6]: JP2009-30749(A)
- [Patent Literature 7]: JP2006-283800(A)

### SUMMARY OF THE INVENTION

### [Problem to be Solved by the Invention]

Taking the problems above into consideration, an object of the present invention is provide a toroidal continuously variable transmission, such that, in construction where a cylindrical convex surface that is formed on the inside surface of a support beam section of a trunnion fits with a concave section that is formed on the outside surface of the outer ring of a thrust rolling bearing, the durability of the support beam section and outer ring can be improved, and such that the contract range between the cylindrical convex surface and the concave section during operation can be enlarged.

Moreover, another object of the present invention is to provide construction of a toroidal continuously variable transmission wherein the manufacture, management and assembly work of parts are easy, reduction of cost is easy, and speed change operation can be stabilized.

### [Means for Solving the Problems]

The toroidal continuously variable transmission of the present invention comprises:
input and output disks which are composed of a pair of disks each having one side surface in the axial direction that is a toroidal curved surface with a circular arc shaped cross section, and are concentrically supported so as to be able to freely rotate relative to each other with the side surfaces facing each other in the axial direction;
a plurality of trunnions, each of which comprises: a pair of tilt shafts that are concentrically provided on both end sections of the trunnion and having a center axis that is at a position torsionally shifted with respect to the center axis of the input and output disk; and a support beam section that extends between these tilt shafts, and comprises a side surface on the inside in the radial direction of the input and output disks, wherein this side surface is composed of a cylindrical convex surface having a center axis that is parallel with the center axis of the tilt shafts and that is located further on the outside in the radial direction of the input and output disks than the center axis of the tilt shafts; and each of the trunnions is provided between the input and output disks in the axial direction of these disks, and can pivotally displace freely around the center axis of the pair of tilt shafts;
a plurality of power rollers that, with the spherical convex circumferential surface in contact with the side surfaces in the axial direction, are held between the input and output disks, and comprise a side surface on the outside in the radial direction of the input and output disks on which an inner raceway is formed; and
a plurality of thrust rolling bearings that comprise: an outer ring that has a concave section formed on the outside in the radial direction of the input and output disk and can fit with the cylindrical convex surface of the support beam section, and a side surface on the inside in the radial direction of the input and output disk and on which an outer raceway is formed; and a plurality of rolling bodies that are located between the outer raceway of this outer ring and the inner raceway of the power roller so as to be able to roll freely.

Each of the thrust rolling bearings is supported by each of the trunnion with the concave section fitted with the cylindrical convex surface of the support beam section such that pivotal displacement in the axial direction of the input and output disks is possible, and each of the power rollers is supported on the inside in the radial direction of the input and output disks of each of the trunnion by way of the thrust rolling bearing so as to be able to rotate freely.

Particularly, in the toroidal continuously variable transmission of a first aspect of the present invention, there are a support hole having a circular cross section that is formed in part of each of the outer rings, a column shaped anchor pin that is fitted into and fastened inside the support hole with an interference fit, with part protruding from the inside surface of the concave section of each of the outer ring, and an anchor groove that is formed in the cylindrical convex surface of the support beam section of each of the trunnions in the circumferential direction of the cylindrical convex surface, and the part of the anchor pin and the anchor groove are engaged such that torque that is applied to the power roller as the input and output disks rotate can be supported by the engagement section between the anchor pin and anchor groove for each of the combinations of the outer rings and the trunnions.

Preferably, the support hole is formed at a position torsionally shifted with respect to the center axis of the concave section at a right angle to the direction of that center axis, and the middle section of the support hole is open in the middle section in the width direction of the concave section;
the anchor pin is such that with the portions near both end sections in the axial direction fitted and fastened inside the support hole with an interference fit, the middle section in the axial direction of the anchor pin is exposed to part of the concave section;
the anchor groove has a circular arc shaped cross section and fits with the middle section in the axial direction of the anchor pin so that there is no vibration or movement; and
together with separating the outer circumferential surface on both ends of the outer ring from part of the trunnion in the axial direction of the support beam section of the trunnion, torque that is applied to the power roller as the input and output disks rotate is supported by the engagement section between the middle section in the axial direction of the anchor pin and the anchor groove.

Preferably in this case, a support shaft that is concentric with the outer raceway is integrally formed with the outer ring in the center section of the inside surface of the outer ring;
the power roller is provided around this support shaft so as to be able to rotate freely by way of a radial needle roller bearing;
lubrication oil can be fed to a downstream-side lubrication oil channel that is formed in the center section of the support shaft from an upstream-side lubrication oil channel that is formed in the support beam section of the trunnion;
the support hole and the anchor groove are formed at positions that are separated from the center of the support shaft in the axial direction of the support beam section; and
the middle section in the axial direction of the anchor pin exists in a portion that is separated from the connection section between the downstream-side lubrication oil channel and the upstream-side lubrication oil channel.

Alternatively, it is preferred that
support holes be formed at two locations in the width direction of the concave section at positions in the axial direction of the center axis of the concave section that coincide with each other; and
an anchor pin be pressure fitted into each support hole such that the end section of each anchor pin protrudes from the inner surface of the concave section.

Particularly in the toroidal continuously variable transmission of a second aspect of the present invention, the toroidal continuously variable transmission comprises:
input and output disks which are composed of a pair of disks each having one side surface in the axial direction that is a toroidal curved surface with a circular arc shaped cross section, and are concentrically supported so as to be able to freely rotate relative to each other with the side surfaces facing each other in the axial direction;
a plurality of trunnions, each of which comprises: a pair of tilt shafts that are concentrically provided on both end sections of the trunnion and having a center axis that is at a position torsionally shifted with respect to the center axis of the input and output disk; and a support beam section that extends between these tilt shafts, and comprises a side surface on the inside in the radial direction of the input and output disks, wherein this side surface is composed of a cylindrical convex surface having a center axis that is parallel with the center axis of the tilt shafts and that is located further on the outside in the radial direction of the input and output disks than the center axis of the tilt shafts; and each of the trunnions is provided between the input and output disks in the axial direction of these disks, and can pivotally displace freely around the center axis of the pair of tilt shafts;
a plurality of power rollers that, with the spherical convex circumferential surface in contact with the side surfaces in the axial direction, are held between the input and output disks, and comprise a side surface on the outside in the radial direction of the input and output disks on which an inner raceway is formed; and
a plurality of thrust rolling bearings that comprise: an outer ring that has a concave section formed on the outside in the radial direction of the input and output disk and can fit with the cylindrical convex surface of the support beam section, and a side surface on the inside in the radial direction of the input and output disk and on which an outer raceway is formed; and a plurality of rolling bodies that are located between the outer raceway of this outer ring and the inner raceway of the power roller so as to be able to roll freely;
each of the thrust rolling bearings is supported by each of the trunnion with the concave section fitted with the cylindrical convex surface of the support beam section such that pivotal displacement in the axial direction of the input and output disks is possible, and each of the power rollers is supported on the inside in the radial direction of the input and output disks of each of the trunnion by way of the thrust rolling bearing so as to be able to rotate freely;
in construction where the outer ring is supported by the trunnion by the concave section, which is a cylindrical concave surface that is formed on the outside surface, fitting with the cylindrical convex surface, and by part of the outer circumferential surface of the outer ring engaging with stepped surfaces that are formed in part of the trunnion on both sides of the cylindrical convex surface such that pivotal displacement in the axial direction of the input and output disks is possible, and torque applied to the power rollers as the disks rotate is supported,
the space between the pair of stepped surfaces that are formed in each trunnion is greater than the outer diameter of the outer ring, an elastic member is placed in the portion between one of the stepped surfaces and the outer circumferential surface of the outer ring, and this elastic member pushes the outer ring toward the other stepped surface.

In this aspect,
the elastic member is a plate spring that is formed by bending an elastic metal plate into a partial arc shape;
a support concave section is formed in the portion of the outer circumferential surface of the outer ring that faces the one stepped surface, this support concave section being recessed further in the radial direction than the adjacent portions in the circumferential direction to a depth shallower than the thickness of the plate spring in the free state, and is deeper than the thickness of the elastic metal plate; and
the plate spring can be placed in this support concave section.

Alternatively,
the elastic member is a plate spring that is formed by bending an elastic metal plate into a partial circular arc shape;
there is a spring holder having a support concave section on one surface that is shallower than the thickness of the plate spring in the free state, and deeper than the thickness of elastic metal plate;
a flat surface is formed on the portion of the outer circumferential surface of the outer ring that faces the one stepped surface, and extends in the tangential direction of that portion;
the other surface of the spring holder comes in contact with this flat surface; and
the plate spring can be placed inside the support concave section.

In this aspect, alternatively it is preferred that a pressure piece be placed in the portion between at least the one stepped surface and the outer circumferential surface of the outer ring, such that the elastic member pushes this pressure piece toward the outer ring.

Particularly, in the toroidal continuously variable transmission of a third aspect of the present invention, the toroidal continuously variable transmission comprises:
input and output disks which are composed of a pair of disks each having one side surface in the axial direction that is a toroidal curved surface with a circular arc shaped cross section, and are concentrically supported so as to be able to freely rotate relative to each other with the side surfaces facing each other in the axial direction;
a plurality of trunnions, each of which comprises: a pair of tilt shafts that are concentrically provided on both end sections of the trunnion and having a center axis that is at a position torsionally shifted with respect to the center axis of the input and output disk; and a support beam section that extends between these tilt shafts, and comprises a side surface on the inside in the radial direction of the input and output disks, wherein this side surface is composed of a cylindrical convex surface having a center axis that is parallel with the center axis of the tilt shafts and that is located further on the outside in the radial direction of the input and output disks than the center axis of the tilt shafts; and each of the trunnions is provided between the input and output disks in the axial direction of these disks, and can pivotally displace freely around the center axis of the pair of tilt shafts;
a plurality of power rollers that, with the spherical convex circumferential surface in contact with the side surfaces in the axial direction, are held between the input and output disks, and comprise a side surface on the outside in the radial direction of the input and output disks on which an inner raceway is formed; and
a plurality of thrust rolling bearings that comprise: an outer ring that has a concave section formed on the outside in the radial direction of the input and output disk and can fit with the cylindrical convex surface of the support beam section, and a side surface on the inside in the radial direction of the input and output disk and on which an outer raceway is formed; and a plurality of rolling bodies that are located between the outer raceway of this outer ring and the inner raceway of the power roller so as to be able to roll freely;
each of the thrust rolling bearings is supported by each of the trunnion with the concave section fitted with the cylindrical convex surface of the support beam section such that pivotal displacement in the axial direction of the input and output disks is possible, and each of the power rollers is supported on the inside in the radial direction of the input and output disks of each of the trunnion by way of the thrust rolling bearing so as to be able to rotate freely;
adjustment of the transmission ratio between the input and output disks is performed by an actuator provided for each trunnion causing the trunnion to displace in the axial direction of the tilt shafts, and causing the trunnion to pivotally displace around the tilt shafts;
the inclination angles of the trunnions around the tilt shafts, which are related to the transmission ratio, are controlled by transmission ratio control valves that control the supply of hydraulic oil to the actuators, and adjustment of the opened/closed state of the transmission ratio control valves is performed by transmitting the displacement of one of the plurality of trunnions to the component members of these transmission ratio control valves;
the space between the pair of stepped surfaces that are formed in each trunnion on both end sections in the axial direction of the support beam section of the trunnion is greater than the dimension in the same direction of the outer ring; and
a torque support section is formed only between the one of the plurality of trunnions and the outer ring that is supported by this trunnion so as to be able to pivotally displace, the torque support section supporting the torque that is applied to the power roller that is supported by this trunnion as the input and output disks rotate with allowing the pivotal displacement of this outer ring with respect to the support beam section of this trunnion and preventing this outer ring from displacing in one axial direction of this support beam section and making displacement of the outer ring in the other axial direction of the support beam section with respect to the trunnion difficult; and
a pressure piece and an elastic member can be installed in the one trunnion in the portion between one of the stepped surfaces and the outer circumferential surface of the outer ring, and the torque support section is the other stepped surface or a member that is installed on the other stepped surface, and pushes the pressure piece toward the outer ring by the elastic member.

The torque support section that is formed in only one of the trunnions can be constructed from the anchor pin and the anchor groove that engages with part of the anchor pin of the second form of the invention.

Furthermore, preferably
an anchor piece having the same shape as the pressure piece is plated between the other stepped surface of the pair of stepped surfaces and the outer circumferential surface of the outer ring;
concentric support holes are formed in each of the stepped surfaces of each of the trunnions;
each of the pressure pieces and the anchor pieces comprises a main section that is located between the stepped surface and the outer circumferential surface of the outer ring, and a convex section that protrudes from the main section on the surface opposite the power roller; and
each of the convex sections of the pressure pieces and the anchor pieces fit inside the support holes, such that the elastic members that are mounted inside one of the support holes pushes the pressure piece against the outer circumferential surface of the outer ring, which pushes the outer ring toward the anchor piece.

In this form as well, an anchor piece can be further provided, concentric support holes can be formed in each stepped surface, each of pressure piece and the anchor piece can comprise a main section that is located between the stepped surface and the outer circumferential surface of the outer ring, and a convex section that protrudes from the main section on the surface opposite the power roller, the convex sections can fit inside the support holes, and the area of contact between the outer circumferential surface of the outer ring an the anchor piece can form the torque support section.

Alternatively, in the toroidal continuously variable transmission of a fourth aspect of the present invention, the toroidal continuously variable transmission comprises:
input and output disks which are composed of a pair of disks each having one side surface in the axial direction that is a toroidal curved surface with a circular arc shaped cross section, and are concentrically supported so as to be able to freely rotate relative to each other with the side surfaces facing each other in the axial direction;
a plurality of trunnions, each of which comprises: a pair of tilt shafts that are concentrically provided on both end sections of the trunnion and having a center axis that is at a position torsionally shifted with respect to the center axis of the input and output disk; and a support beam section that extends between these tilt shafts, and comprises a side surface on the inside in the radial direction of the input and output disks, wherein this side surface is composed of a cylindrical convex surface having a center axis that is parallel with the center axis of the tilt shafts and that is located further on the outside in the radial direction of the input and output disks than the center axis of the tilt shafts; and each of the trunnions is provided between the input and output disks in the axial direction of these disks, and can pivotally displace freely around the center axis of the pair of tilt shafts;
a plurality of power rollers that, with the spherical convex circumferential surface in contact with the side surfaces in the axial direction, are held between the input and output disks, and comprise a side surface on the outside in the radial direction of the input and output disks on which an inner raceway is formed; and
a plurality of thrust rolling bearings that comprise: an outer ring that has a concave section formed on the outside in the radial direction of the input and output disk and can fit with the cylindrical convex surface of the support beam section, and a side surface on the inside in the radial direction of the input and output disk and on which an outer raceway is formed; and a plurality of rolling bodies that are located between the outer raceway of this outer ring and the inner raceway of the power roller so as to be able to roll freely;
each of the thrust rolling bearings is supported by each of the trunnion with the concave section fitted with the cylindrical convex surface of the support beam section such that pivotal displacement in the axial direction of the input and output disks is possible, and each of the power rollers is supported on the inside in the radial direction of the input and output disks of each of the trunnion by way of the thrust rolling bearing so as to be able to rotate freely;
adjustment of the transmission ratio between the input and output disks is performed by an actuator provided for each trunnion causing the trunnion to displace in the axial direction of the tilt shafts, and causing the trunnion to pivotally displace around the tilt shafts;
the inclination angles of the trunnions around the tilt shafts, which are related to the transmission ratio, are controlled by transmission ratio control valves that control the supply of hydraulic oil to the actuators, and adjustment of the opened/closed state of the transmission ratio control valves is performed by transmitting the displacement of one of the plurality of trunnions to the component members of these transmission ratio control valves;
the space between the pair of stepped surfaces that are formed in each trunnion on both end sections in the axial direction of the support beam section of the trunnion is greater than the dimension in the same direction of the outer ring; and
a torque support section is formed only between the one of the plurality of trunnions and the outer ring that is supported by this trunnion so as to be able to pivotally displace, the torque support section supporting the torque that is applied to the power roller that is supported by this trunnion as the input and output disks rotate with allowing the pivotal displacement of this outer ring with respect to the support beam section of this trunnion and preventing this outer ring from displacing in the axial direction of this support beam section;
there are a support hole having a circular cross section that is formed in part of each of the outer rings, a column shaped anchor pin that is fitted into and fastened inside the support hole with an interference fit, with part protruding from the inside surface of the concave section of each of the outer ring, and an anchor groove that is formed in the cylindrical convex surface of the support beam section of each of the trunnions in the circumferential direction of the cylindrical convex surface, and the part of the anchor pin and the anchor groove are engaged such that torque that is applied to the power roller as the input and output disks rotate can be supported by the engagement section between the anchor pin and anchor groove for each of the combinations of the outer rings and the trunnions.

Preferably, the support hole is formed at a position torsionally shifted with respect to the center axis of the concave section at a right angle to the direction of that center axis, and the middle section of the support hole is open in the middle section in the width direction of the concave section;
the anchor pin is such that with the portions near both end sections in the axial direction fitted and fastened inside the support hole with an interference fit, the middle section in the axial direction of the anchor pin is exposed to part of the concave section;
the anchor groove has a circular arc shaped cross section and fits with the middle section in the axial direction of the anchor pin so that there is no vibration or movement; and
together with separating the outer circumferential surface on both ends of the outer ring from part of the trunnion in the axial direction of the support beam section of the trunnion, torque that is applied to the power roller as the input and output disks rotate is supported by the engagement section between the middle section in the axial direction of the anchor pin and the anchor groove.

Alternatively, it is preferred that
support holes be formed at two locations in the width direction of the concave section at positions in the axial direction of the center axis of the concave section that coincide with each other; and
an anchor pin be pressure fitted into each support hole such that the end section of each anchor pin protrudes from the inner surface of the concave section.

### [Effect of the Invention]

In the case of the toroidal continuously variable transmission of the first through third aspects of the present invention, construction is achieved in which the manufacture, management and assembly work of parts are easy, reduction of cost is easy, and speed change operation can be stabilized. In the first aspect, stabilization of the speed change operation is achieved by preventing displacement in the axial direction of the support beam section of the outer ring with respect to the trunnion by part of the anchor pin provided on the outer ring side engaging with an anchor groove provided on the trunnion side. Moreover, in the second aspect, stabilization of the speed change operation is achieved by making displacement in the axial direction of the support beam section of the outer ring with respect to the trunnion difficult by an elastic member pushing the outer ring toward the other stepped surface. Furthermore, in the third aspect, the cost of construction for supporting this kind torque is greatly suppressed by providing a transmission ratio control valve in only the trunnion that is used for feedback control.

### BRIEF DESCRIPTION OF THE DRAWINGS

FIG. 1 to 9 disclose a continuously variable transmission (CVT) not falling within the wording of the claims.
FIG. 1 is a partial cross-sectional view of a first example of a CVT, and illustrates the state before assembling together the trunnion and outer ring for the thrust ball bearing that was integrally manufactured with the support shaft.
FIG. 2 is a drawing similar to FIG. 1, and illustrates a second example of the CVT.
FIG. 3 is a cross-sectional view of a trunnion, and illustrates another example (second example) of the shape of the generating line of the cylindrical convex surface.
FIG. 4 is a cross-sectional view of the outer ring for a thrust ball bearing that was integrally manufactured with the support shaft, and illustrates another example (second example) of the shape of the generating line of the concave section.
FIG. 5 is a cross-sectional view of a trunnion, and illustrates another example (third example) of the shape of the generating line of the cylindrical convex surface.
FIG. 6 is a cross-sectional view of the outer ring for a thrust ball bearing that was integrally manufactured with the support shaft, and illustrates another example (third example) of the generating line of the concave section.
FIG. 7 is a cross-sectional view of the trunnion, and illustrates another example of the cross-sectional shape of the cylindrical convex surface in a virtual plate that is orthogonal to the axial direction of the cylindrical convex surface.
FIG. 8 is a cross-sectional view of the outer ring for the thrust ball bearing that was integrally manufactured with the support shaft, and illustrates another example of the cross-sectional shape of the concave section in a virtual plate that is orthogonal to the axial direction of the concave section.
FIG. 9 is a cross-sectional view of the outer ring for the thrust ball bearing that was integrally manufactured with the support shaft, and illustrates in an exaggerated manner using a dot-dashed line, the state of elastic deformation of the concave section during operation.
FIG. 10 is a side view of a first example of a first embodiment of the present invention, and illustrates the sate of the removed trunnion and outer ring as seen from the circumferential direction of the disk.
FIG. 11 is a cross-sectional view of section a-a in FIG. 10.
FIG. 12 is a drawing similar to FIG. 10, and illustrates the state in the progress of assembling the trunnion and outer ring.
FIG. 13 is a drawing similar to FIG. 10, and illustrates a second example of the first embodiment of the present invention.
FIG. 14 is a cross-sectional view of section b-b in FIG. 13.
FIGS. 15A and 15B illustrate a first example of a second embodiment of the present invention, where FIG. 15A is a cross-sectional view of the major parts corresponding to the left side in FIG. 29, and FIG. 15B is a cross-sectional view of the major parts corresponding to the right side in FIG. 29.
FIG. 16 is a cross-sectional view of a second example of the second embodiment of the present invention, and illustrates the major parts corresponding to FIG. 15B with part of the members omitted.
FIG. 17 is an exploded perspective view of the second example of the second embodiment of the present invention.
FIG. 18 is an enlarged cross-sectional view of part a in FIG. 16.
FIGS. 19A and 19B are perspective views, where FIG. 19A illustrates the removed outer ring in a state as seen from the opposite side of FIG. 17, and FIG. 19B is an enlarged perspective view of the plate spring as seen from the same direction as in FIG. 19A.
FIG. 20 is a perspective view of the installed outer ring and plat spring as seen from the same direction as in FIG. 19.
FIG. 21 illustrates a third example of the second embodiment of the present invention, and is similar to FIG. 16.
FIG. 22 illustrates the third example of the second embodiment of the present invention, and is similar to FIG. 17.
FIG. 23 is an enlarged view of part b in FIG. 21.
FIGS. 24A is a perspective views illustrating the removed outer ring in a state as seen from the opposite side as in FIG. 22, and FIG. 24B is an enlarged perspective view of a spring holder as seen from the same direction as in FIG. 24A.
FIG. 25 is a perspective view illustrating the installed outer ring, spring holder and plate spring as seen from the same directions as in FIGS. 24A and 24B.
FIG. 26 illustrates a fourth example of the second embodiment of the present invention, and is similar to FIG. 23.
FIGS. 27A and 27B illustrate an example of a third embodiment of the present invention, where FIG. 27A is a cross-sectional view of the major parts corresponding to the left side in FIG. 29, and FIG. 27B is a cross-sectional view of the major parts corresponding to the right side in FIG. 29.
FIG. 28 is a cross-sectional view of a first example of conventional construction.
FIG. 29 is a cross-sectional view corresponding to section a-a in FIG. 28.
FIG. 30 is a cross-sectional view of conventional construction, and illustrates the hydraulic control apparatus for controlling the transmission ratio.
FIG. 31 is a perspective view of a second example of conventional construction, and illustrates a trunnion supporting a power roller by way of a thrust bearing as seen from the outside in the radial direction of the output and input disks.
FIG. 32 is a front view of a second example of conventional construction, and illustrates the state as seen from the circumferential direction of the disk.
FIG. 33 is a top view as seen from above in FIG. 32.
FIG. 34 is a side view as seen from the right side in FIG. 32.
FIG. 35 is a cross-sectional view of section d-d in FIG. 33.
FIG. 36 is a cross-sectional view of section e-e in FIG. 32.
FIG. 37 is a cross-sectional view of the first and second examples of conventional construction, and illustrates in an exaggerated manner the state of elastic deformation of the trunnion due to a thrust load that is applied from the power roller as seen from the same direction as in FIG. 35.
FIGS. 38A and 38B are cross-sectional views illustrating the direction of a moment M that acts during operation on the outer ring for a thrust ball bearing that was integrally manufactured with the support shaft, where FIG. 38A is for the first example of conventional construction, and FIG. 38B is for the second example.
FIG. 39A is a partial cutaway perspective view of the thrust ball bearing that was integrally manufactured with the support shaft of the first example of conventional construction, and FIG. 39B is a partial cutaway perspective view of the trunnion.
FIG. 40A is a partial cutaway perspective view of the thrust ball bearing that was integrally manufactured with the support shaft of the second example of conventional construction, and FIG. 40B is a partial cutaway perspective view of the trunnion.

### BEST MODES FOR CARRYING OUT THE INVENTION

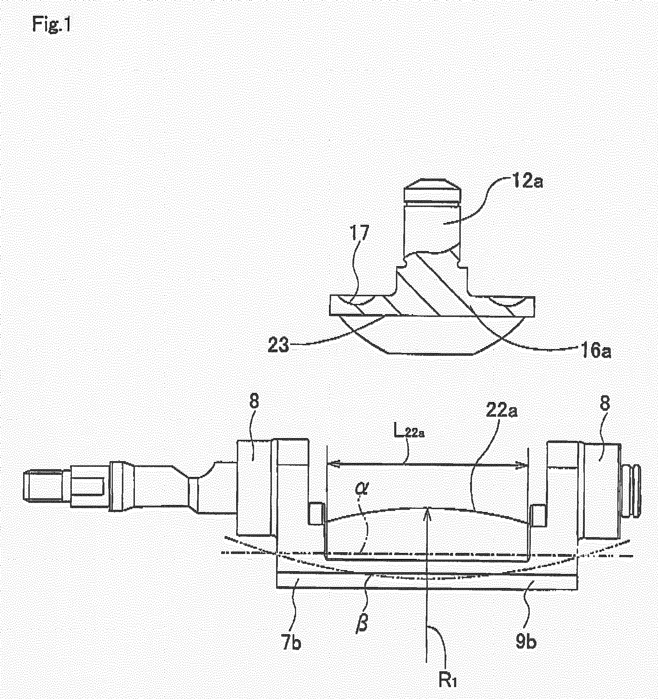

FIG. 1 to 9 disclose a continuously variable transmission (CVT) not falling within the wording of the claims.

FIG. 1 illustrates a first example of a CVT. A feature of this example is the shape of the cylindrical convex surface 22a that is formed around the inside surface (top surface in FIG. 1) of the support beam section 9b of the trunnion 7b. The construction and functions of the other parts are the same as in the second example of conventional construction, so the same reference numbers will be used for identical parts, and any redundant drawings and explanations will be omitted or simplified such that the explanation below centers on the feature of this example.

In this example, the cylindrical convex surface 22a is not a simple cylindrical convex surface, but as illustrated in an exaggerated manner in FIG. 1, crowning is provided over the entire cylindrical convex surface 22a. More specifically, the shape of the generating line of the entire cylindrical convex surface 22a, which is the portion for which crowning is provided, is a simple circular arc shape that, as exaggeratedly illustrated in FIG. 1, is such that the center section protrudes the most toward the inside (top side of FIG. 1) in the radial direction of the input disk 2 and output disk 5 (FIG. 28). In this example, the dimension L₂₂ₐ in the axial direction of the cylindrical convex surface 22a is 60 to 70 mm, and the radius of curvature R₁ of the generating line shape (simple circular arc shape) of the cylindrical convex surface 22a is 2000 mm. On the other hand, in this example, crowning is not especially provided for the concave section 23 that is formed around the outside surface (bottom surface in FIG. 1) of the outer ring 16a of the thrust ball bearing. In other words, this concave section 23 is the same as in the case of the second example of conventional construction, and is a simple cylindrical concave surface, with the shape of the generating line of this concave section 23 being a simple straight shape. In this example, a thrust ball bearing is used as the thrust rolling bearing.

During operation of the toroidal continuously variable transmission of this example, the support beam section 9b of the trunnion 7b elastically deforms such that the neutral line moves from the straight line α to the curved line β as exaggeratedly illustrated in FIG. 1 due to a thrust load that is applied from the input disk 2 and output disk 5 to the power roller 6a (FIG. 35 and FIG. 36). Due to this elastic deformation, the shape of the generating line (simple circular arc shape) of the cylindrical convex surface 22a that is formed around the inside surface of the support beam section 9b changes in a direction that coincides with the shape of the generating line of the concave section 23 that is formed on the outside surface of the outer ring 16a (straight shape, or a shape that has changed a little from this straight shape due to elastic deformation of the outer ring 16a). As a result, there is a tendency for the cylindrical convex surface 22a to coincide with the concave section 23, or in other words, there is a tendency for contact over a sufficiently wide range. Therefore, during operation, it is possible to keep the contact pressure that is applied at the area of contact between the cylindrical convex surface 22a and the concave section 23 low, and thus it is possible to improve the durability of the support beam section 9b and the outer ring 16a.

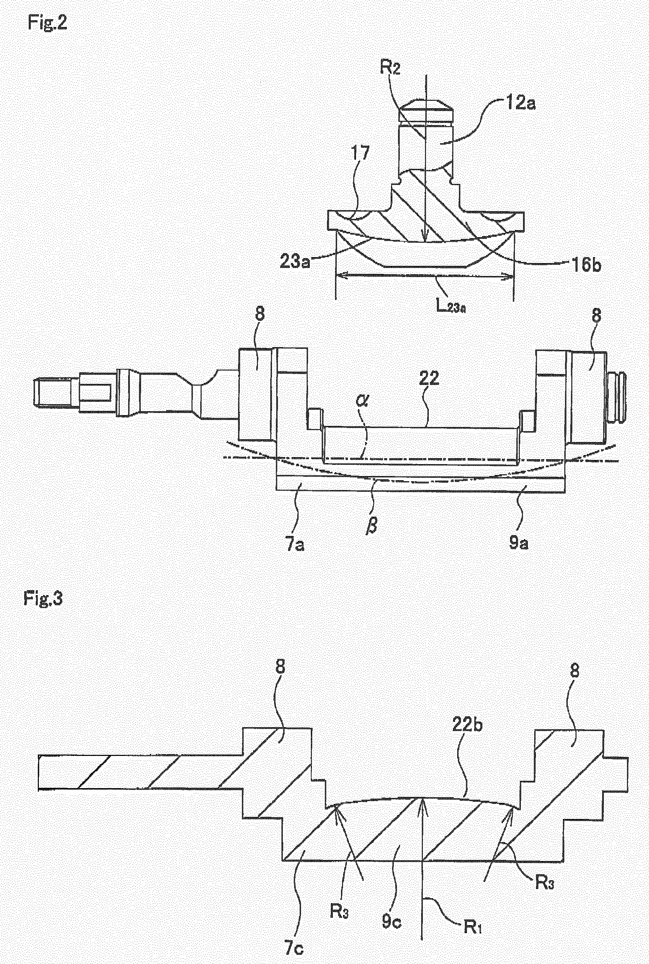

FIG. 2 illustrates a second example of the CVT. A feature of this example is the shape of the concave section 23a that is formed on the outside surface (bottom surface in FIG. 2) of the outer ring 16b of the thrust ball bearing for supporting a thrust load that is applied to the power roller 6a (FIG. 35 and FIG. 36). The basic construction and functions of the other parts are the same as in the second example of conventional construction.

In this example, the concave section 23a is not a simple cylindrical concave surface, but as exaggeratedly illustrated in FIG. 2, crowning is provided for the entire concave section 23a. More specifically, the shape of the generating line of the entire concave section 23a, which is the portion where crowning is provided, is such that, as exaggeratedly illustrated in FIG. 2, the center section is a simple arc shape that protrudes the most in toward the outside (bottom side in FIG. 2) in the radial direction of the input disk 2 and output disk 5 (FIG. 28). In this example, the dimension L₂₃ₐ in the axial direction of the concave section 23a is 55 to 65 mm, and the radius of curvature R₂ of the generating line shape (simple circular arc shape) of the concave section 23a is 2000 mm. On the other hand, in this example, crowning is not especially provided for the cylindrical convex surface 22 that is formed on the inside surface (top surface in FIG. 2) of the support beam section 9a of the trunnion 7a. In other words, this cylindrical convex surface 22 is a simple cylindrical convex surface that is similar to that in the second example of conventional construction, and the shape of the generating line of this cylindrical convex surface 22 is a simple straight shape.

During operation of the toroidal continuously variable transmission of this example, due to a thrust load that is applied to the power roller 6a from the input disk 2 and output disk 5, the support beam section 9a of the trunnion 7a elastically deforms as exaggeratedly illustrated in FIG. 2 such that the neutral line moves from the straight line α to a curved line β. Due to this elastic deformation, the shape of the generating line (straight line) of the cylindrical convex surface 22 that is formed on the inside surface of the support beam section 9a changes in a direction that coincides with the shape of the generating line (simple circular arc shape, or a shape that has changed a little from this simple circular arc shape due to elastic deformation of the outer ring 16b) of the concave section 23a that is formed on the outside surface of the outer ring 16b. As a result, there is a tendency for the cylindrical convex surface 22 to coincide with the concave section 23a, or in other words, there is a tendency for contact over a sufficiently wide range. Therefore, during operation, it is possible to keep the contact pressure that is applied at the area of contact between the cylindrical convex surface 22 and the concave section 23a low, and thus it is possible to improve the durability of the support beam section 9a and the outer ring 16b.

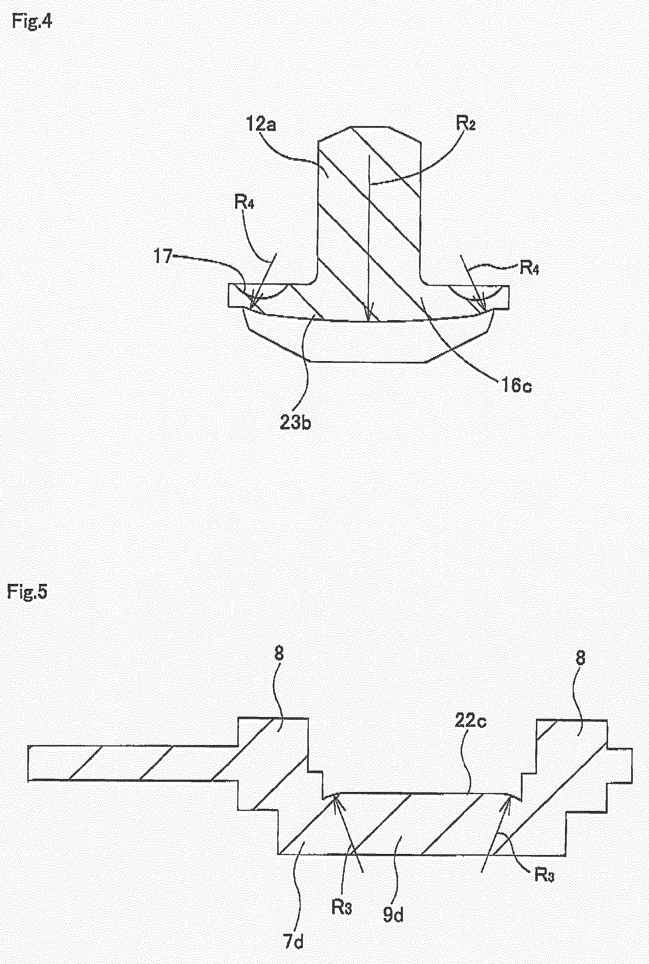

In the case of this CVT, when crowning is provided for the entire cylindrical convex surface or for the entire concave section as in the first and second example, it is also possible, as exaggeratedly illustrated in FIG. 3 and FIG. 4, to have a complex curved shape such that the entire generating line shape of the cylindrical convex section 22b, or the entire generating line shape of the concave section 23b has a radius of curvature R₁, R₂ in the middle section that is comparatively large, and radius of curvature R₃, R₄ on both end sections that is comparatively small (for example, for the same size as the first example and second example, R₁, R₂ is about 2000 mm, and R₃, R₄ is about 1000 mm).

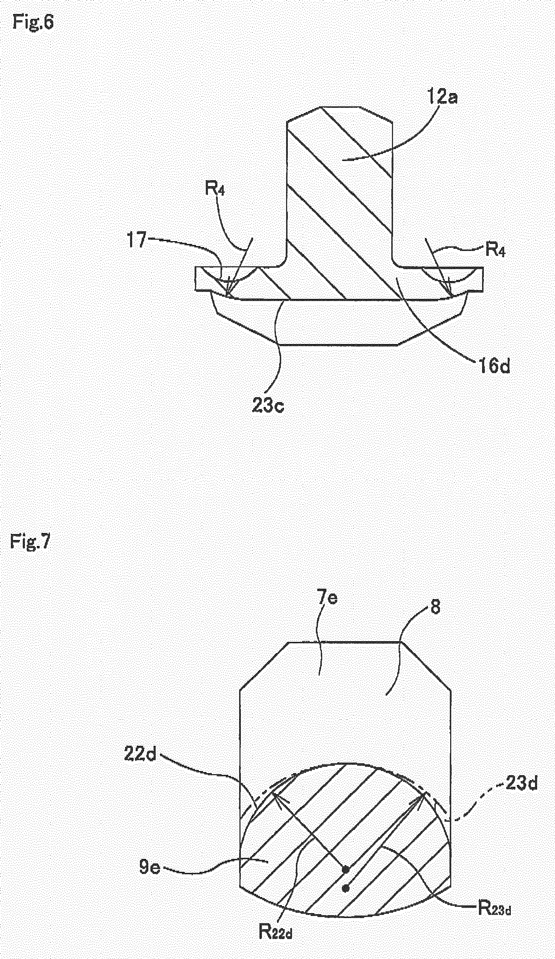

Moreover, as exaggeratedly illustrated in FIG. 5, crowning can be provided only on both of the end sections in the axial direction of the cylindrical convex 22c, or as exaggeratedly illustrated in FIG. 6, only on both end sections in the axial direction of the concave section 23c, and to make only the generating line shape of the both end sections of the cylindrical convex surface 22c or the concave section 23c a circular arc shape (for example, for the same size as the first example and second example, these radii of curvature of these circular arc shapes are R₃, R₄ of about 1000 mm).

Furthermore, in the first example and second example, construction is employed wherein crowing is provided on only one surface of either the cylindrical convex surface or the concave section, however, alternatively, it is also possible to employ construction wherein crowning is provided on the surface of both the cylindrical convex surface and the concave section. In the case of employing either construction, what kind of crowning to be provided on the surfaces (cylindrical convex surface or concave section) is set so that the object of the present invention (object of improving the durability of the support beam section of the trunnion and the outer ring of the thrust rolling bearing, by making the range of contact between the cylindrical convex surface and the concave section due to elastic deformation that occurs during operation sufficiently large) can be sufficiently achieved. Preferably, the shape and dimension of the crowning are set so that in the state where the thrust load that is applied to the power roller during operation becomes a maximum (the input torque to the input disk becomes a maximum), or in the state where the thrust load is a size such that the load is applied for the longest time, the contact surface area between the cylindrical convex surface and the concave section becomes a maximum.

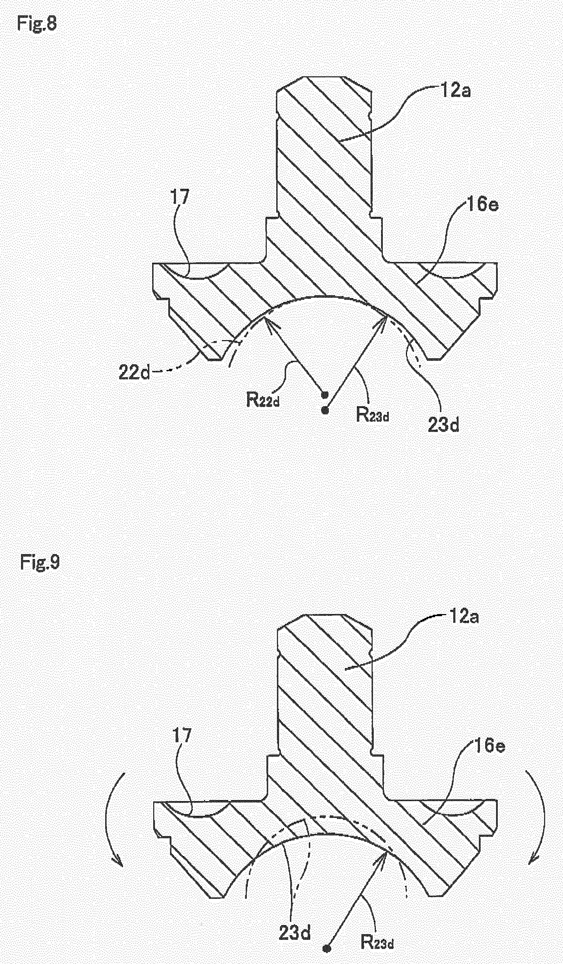

Moreover, in the case of this CVT, it is also possible to employ construction such as exaggeratedly illustrated in FIG. 7 and FIG. 8. In other words, the radius of curvature R_{22d} in the free state of the cylindrical convex surface 22d in a virtual plane that is orthogonal to the axial direction of the cylindrical convex surface 22d is a little less than the radius of curvature R_{23d} in the free state of the concave section 23d in a virtual plane that is orthogonal to the axial direction of the concave section 23d (R_{22d} < R_{23d}). By employing this construction, it is possible to obtain the following function and effects.

That is, during operation of the toroidal continuously variable transmission, when the outer ring 16e elastically deforms due to the thrust load that is applied to the power roller, there is a tendency for the radius of curvature R_{23d} of the concave section 23d to become a little smaller. More specifically, there is a tendency for the cross-sectional shape of the concave section 23d to change from the state illustrated by the solid line in FIG. 9 to the state exaggeratedly illustrated by the dot-dash line in FIG. 9. Furthermore, in other words, there is a tendency for the center section in the circumferential direction of the concave section 23d to elastically deform a little in the direction away from the cylindrical convex surface 22d. As a result, there is a tendency for only both ends in the circumferential direction of the concave section 23d to come in contact with the cylindrical convex surface 22d such that the contact pressure between the concave section 23d and the cylindrical convex surface 22d becomes too large. Therefore, by employing the dimensional relationship described above (R_{22d} < R_{23d} in the free state) in addition to providing crowning on at least one of the cylindrical convex surface 22d and concave section 23d, there is a tendency for the radius of curvature R_{23d} of the concave section 23d to coincide with the radius of curvature R_{22d} of the cylindrical convex surface 22d (R_{23d} = R_{22d}). Therefore, it is possible for the concave section 23d to come in contact with the cylindrical convex surface 22d over a wider range. As a result, during operation it is possible to keep the contact pressure at the area of contact between the cylindrical convex surface 22d and the concave section 23d low, and thus it is possible to further improve the durability of the support beam section 9e and the outer ring 16e.

Even in the case of employing this construction, in addition to a simple circular arc shape, it is possible to make the cross-sectional shaped of at least one of the cylindrical convex surface or concave section a complex circular arc shape. In either case, the cross-sectional shape and the radius of curvature in the free state of the cylindrical convex and concave section are set so that the object for employing this construction (the object of making the range of contact between the engaging protruding section and the engaging concave section due to elastic deformation that occurs during operation wider) can be sufficiently achieved. Preferably, the cross-sectional shape and the radius of curvature of the cylindrical convex surface and the concave section in the free state is set so that in the state where the thrust load that is applied to the power roller during operation becomes a maximum, or in the state where the thrust load is a size such that the load is applied for the longest time, the contact surface area of the cylindrical convex surface and the concave section becomes a maximum.

### [Embodiment 1, Example 1]

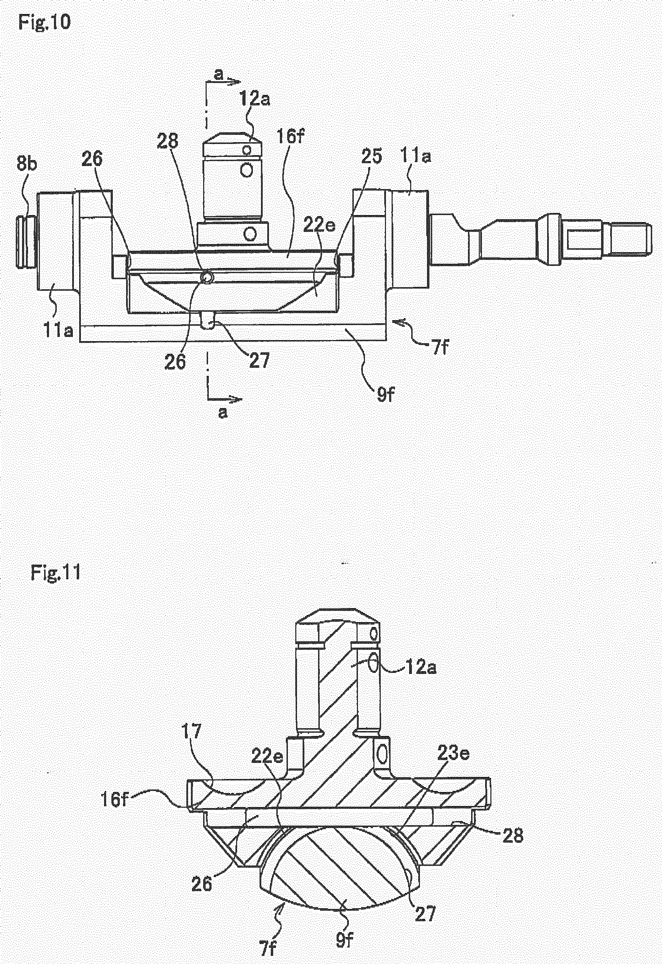

FIG. 10 to FIG. 12 illustrate a first example of a first embodiment of the present invention. A feature of this example is construction wherein, in order to stabilize the speed change operation, the outer ring 16f of the thrust ball bearing 13a is supported by the support beam section 9f of the trunnion 7f so as to be able to pivotally displace with respect to the support beam section 9f, and so that displacement is not possible in the axial direction of the support beam section 9f. The construction and function of the other parts are the same as in the second example of conventional construction.

In this example, an anchor pin 26 that is supported by and fastened to the outer ring 16f side is fitted with an anchor groove 27 that is formed on the cylindrical convex surface 22e of the support beam section 9f. The distance D between a pair of stepped surfaces 25 that are formed on both end sections of the support beam section 9f of the trunnion 7f is sufficiently larger than the outer diameter d of the outer ring 16f (FIG. 35).

In order to support and fasten the anchor pin 26, a support hole 28 having a circular cross section is formed in the portion of part of the outer ring 16f that is separated from the center of the outer ring 16f, and is formed at a position that is torsionally shifted with respect to the center axis of the concave section 23e that is formed on the outside surface of the outer ring 16f, and both ends are open in the outer circumferential surface in a direction that is at a right angle to the direction of this center axis. In other words, a support shaft 12a is integrally formed with the outer ring 16f in the center section of the inside surface of the outer ring 16f concentric with the outer raceway 17, and the power roller 6a is supported around this support shaft 12a by way of the radial needle roller bearing 24 so as to be able to rotate freely (FIG. 35 and FIG. 36). Moreover, lubrication oil can be fed from an upstream-side lubrication oil channel 30 (FIG. 35 and FIG. 36) that is formed in the support beam section 9a to a downstream-side lubrication oil channel 29 that is formed in the center section of the support shaft 12a. The support hole 28 and the anchor groove 27 are formed in positions that are separated in the axial direction of the support beam section 9f from the center of the support shaft 12a, avoiding the downstream-side lubrication oil channel 29 and the upstream-side lubrication oil channel 30. The direction of the support hole 28 is at a right angle to the direction of the concave section 23e that is formed on the outside surface of the outer ring 16f (direction of the center axis of the support beam section 9f that engages with this concave section 23e). About half or less than half in cross section of the middle section in the axial direction of the support hole 28 is open to part of the concave section 23e.

The anchor pin 26 is made of a hard metal such as bearing steel or high-speed steel, and together with having an overall circular column shape, has a chamfer section with a 1/4 circular arc shaped cross section formed on the outer perimeter edges of the surfaces on both ends in the axial direction. In the free state, the inner diameter of the support hole 28 is a little less than the outer diameter of the anchor pin 26, and by pressure fitting the anchor pin 26 into the support hole 28, both end sections in the axial direction fit into and are fastened to the outer ring 16f with an interference fit. In this state, the semicircular column shaped portion, which is the half section part in the radial direction of the middle section of the anchor pin 26 protrudes from the middle section of the concave section 23e.

The anchor groove 27 is formed in the middle section of the cylindrical convex surface 22e of the support beam section 9f in the portion that is aligned with the middle section of the anchor pin 26 when the outer ring 16f and the trunnion 7f are installed together. The anchor groove 27 has a circular arc shaped cross section that is capable of engaging with the middle section in the axial direction of the anchor pin 26 such that there is no vibration or movement, and this anchor groove 27 is formed in the cylindrical convex surface 22e of the support beam section 9f in the circumferential direction of the cylindrical convex surface 22e. The radius of curvature of the cross sectional shape of the anchor groove 27 is equal to or a little greater than 1/2 the outer diameter of the anchor groove 26. With the formation position of the anchor groove 27 regulated, and with this anchor groove 27 and the anchor pin 26 engaged, the outer circumferential surface of the outer ring 16f and the pair of stepped surfaces 25 are sufficiently separated such that there is no contact even though there is elastic deformation as illustrated in FIG. 37.

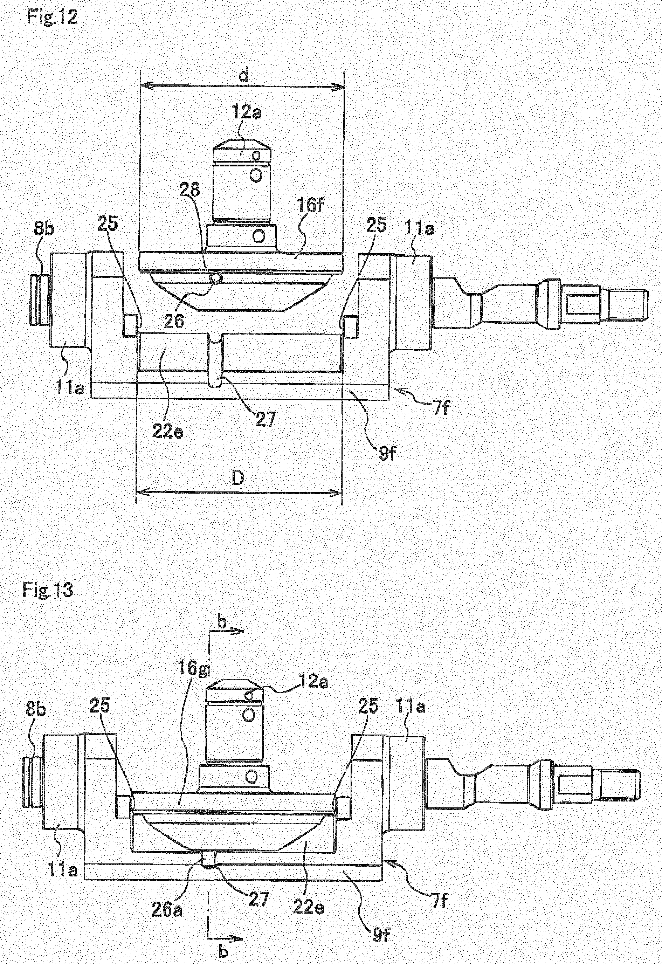

In the toroidal continuously variable transmission of this example, the trunnion 7f and the outer ring 16f are brought together from the state illustrated in FIG. 12 to the state illustrated in FIG. 10, and the installed with the anchor groove 27 and the anchor pin 26 fitted together. When the toroidal continuously variable transmission is operated in this state, the force 2Ft that is applied to the trunnion 7f is supported by the engagement between the middle section in the axial direction of the anchor pin 26 and the anchor groove 27. As the outer ring 16f pivotally displaces with respect to the trunnion 7f due to fluctuation in the transmitted torque, there is relative displacement between the anchor pin 27 and the anchor groove 27, and the position in the circumferential direction of the portion of the middle section of the anchor pin 26 that engages with the anchor groove 27 changes. The anchor pin 26 is column shaped, so this relative displacement between the middle section of the anchor pin 26 and the anchor groove 27 is performed smoothly.

The construction of this example, is sufficient as long as a support hole 28 having a circular cross section is formed in the outer ring 16f in order for the column shaped anchor pin 26 to be supported by and fastened to the outer ring 16f. Manufacturing the column shaped anchor pin 26 with specified dimensional precision, and manufacturing the support hole 28 having a circular cross section with specified dimensional precision are both easy. Moreover, the work of supporting and fastening the anchor pin 26 in the support hole 28 is sufficiently performed by simply pressure fitting the anchor pin 26 into the support hole 28 linearly. After pressure fitting, both end sections of the anchor pin 26 are supported by and fastened to the outer ring 16f, and when the force 2Ft is applied to the middle section of the anchor pin 26, the construction is that of a beam fixed on both ends, so the rigidity against this force 2Ft is increased. As a result, with the construction of this example, low cost construction can be achieved that is capable of maintaining sufficient durability and reliability even in the case of a toroidal continuously variable transmission that transmits large torque.

### [Embodiment 1, Example 2]

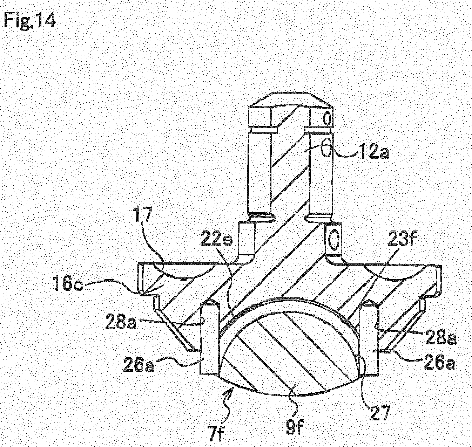

FIG. 13 and FIG. 14 illustrate a second example of the first embodiment of the present invention. In this example, support holes 28a having a circular cross section and having a bottom are formed at two locations in both end sections in the width direction of the concave section 23f that is formed on the outside surface of the outer ring 16g. The positions where these support holes 28a are formed are positions that coincide with each other in the axial direction of the center axis of the concave section 23f (positions on the same circumference). The directions of these support holes 28a are in the same direction (parallel) as the direction of the center axis of the support shaft 12a that is formed on the inside surface of the outer ring 16g. The base side half section of anchor pins 26a are pressure fitted into these support holes 28a with an interference fit, such that these anchor pins 26a are fastened to the outer ring 16g. The portions on the tip side half section of these anchor pins 26 that protrude from the inner circumferential surface of the concave section 23f fit into an anchor groove 27 that is formed in the cylindrical convex surface 22e of the outer circumferential surface of the support beam section 9f of the trunnion 7f.

In the case of the construction of this example as well, processing and assembly of the support holes 28a and the anchor pins 26a can be performed easily. These anchor pins 26a are able to support a large force 2Ft. The construction and function of the other parts are the same as in the first example of the first embodiment.

### [Embodiment 2, Example 1]

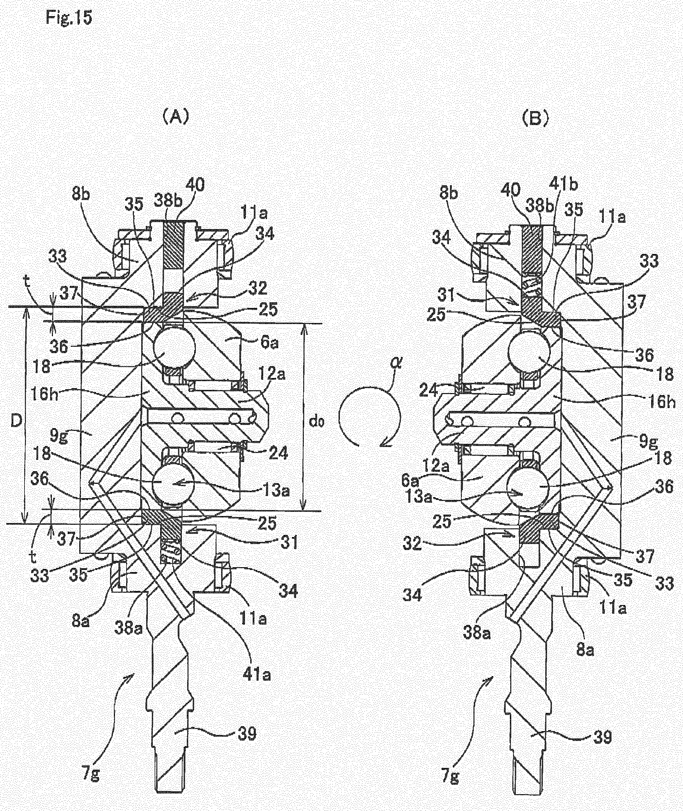

FIGS. 15A and 15B illustrate a first example of a second embodiment of the present invention. A feature of this example is construction wherein, in order to stabilize the speed change operation, the outer rings 16h of the thrust ball bearing 13a are not allowed to displace with respect to the support beam sections 9g of the trunnions 7g due to a light force in the axial direction of the support beam sections 9g. The construction and function of other parts are the same as in the second example of conventional construction.

In the case of the construction of this example, the outer diameter do of each outer ring 16h (or the distance between a pair of parallel flat surfaces that are formed at two locations on opposite sides in the radial direction of the outer ring 16h) is made to be sufficiently less that the distance D between a pair of stepped surfaces 25 that are formed for each trunnion 7g by a dimension that is larger than the combined thickness of the main sections 33 of a pressure piece 31 and anchor piece 32 that are located between the stepped surface 25 and the outer circumferential surface of the outer ring 16h. The pair of a pressure piece 31 and an anchor piece 32 is located in each trunnion 7g on opposite sides in the radial direction of the outer ring 16h.

The pressure piece 31 and the anchor piece 32 have the same shape as each other, and each comprises a main section 33 and a convex section. The main section 33 is located between the stepped surface 25 and the outer circumferential surface of the outer ring 16h, where the surface that comes in contact with the stepped surface 25 is taken to be a stationary-side flat surface 35, and the surface that comes in contact with the outer circumferential surface of the outer ring 16h is taken to be a sliding-side flat surface 36. This sliding-side flat surface 36 comes in sliding contact with part of the outer circumferential surface of the outer ring 16h when the outer ring 16 pivotally displaces around the support beam section 9g. Of the main section 33, the surface that faces the outer circumferential surface of the support beam section 9g has a shape that follows the outer circumferential surface of the support beam section 9g, and functions as a concave curved surface 37. Furthermore, the convex section 34 is column shaped and is formed in the side where the stationary-side flat surface 35 of the main section 33 is formed and in the portion nearer to the power roller 6a than this stationary-side flat surface 35 such that it protrudes toward the opposite side of the outer ring 16h therefrom. The position where the convex section 34 is formed in the circumferential direction of the outer ring 16h is the center position of the main section 33.

Support hole 38a, 38b are formed in the center sections of the tilt shafts 8a, 8b that are formed concentric with each other on both end sections of the trunnion 7g. Of these support holes 38a, 38b, the support hole 38a that is formed in the tilt shaft 8a on the side where the rod 39 that is pushed or pulled by the actuator (FIG. 29) is located is open only on the surface of the inside end of the tilt shaft 8a (surface facing the outer ring 16h), and is a circular hole with a bottom. On the other hand, the support hole 38b that is formed in the tilt shaft 8b on the opposite side is open on both end surfaces of the tilt shaft 8b, and is a circular through hole. The reason for this is to enable processing of these support holes 38a, 38b by a typical machine tool such as a drilling machine. A column shaped plug 40 is fitted into and fastened to the outer half section of the support hole 38b, which is the through hole, with an interference fit, and thus essentially, this support hole 38b is also a circular hole with a bottom.

The pressure piece 31 and the anchor piece 32 are such that the convex sections 34 of each fit inside the opening sections on the side of inside end surfaces of the support holes 38a, 38b so that there is no vibration, however, fit such that displacement in the axial direction of these support holes 38a, 38b is possible. Moreover, a compression coil springs 41a, 41b, which function as elastic members, are provided between the surfaces on the tip ends of the convex sections 34 of the pressure pieces 31 and the back end surface of the support hole 38a or the inside end surface of the plug 40. The elastic force of these compression coil springs 41a, 41b pushes the main sections 33 of the pressure pieces 31 against the outer circumferential surface of the outer ring 16h.

The direction in which that the pressure piece 31 pushes the outer circumferential surface of the outer ring 16h is the same as the direction in which the force 2Ft, which is applied to the outer ring 16h from the input disk 2 and the output disk 5 by way of the power roller 6a, acts during operation of the toroidal continuously variable transmission. In other words, during operation of the toroidal continuously variable transmission, a force 2Ft is applied to each outer ring 16h from the tractions sections in the same direction in the direction of rotation of the input disk 2 and output disk 5. In the construction illustrated in FIGS. 15A, 15B, the input disk 2 rotates in the clockwise direction as indicated by arrow α, and the output disk 5 rotates in the counterclockwise direction. In the state of transmitting power from the engine to the drive wheels, a force 2Ft is applied in an upward direction to the outer ring 16h illustrated in FIG. 15A, and a force 2Ft is applied in a downward direction to the other outer ring 16b that is illustrated in FIG. 15B. The placement directions of the pair of trunnions 7g that are placed between the input disk 2 and output disk 5 are opposite of each other in the direction of rotation, so for one trunnion 7g, the pressure piece 28 and the compression coil spring 41a are installed in the portion of the support hole 38a with a bottom. On the other hand, for the other trunnion 7g, the pressure piece 28 and compression coil spring 41b are installed in the inner half portion that is not plugged by the plug 40 of the support hole 28b, which is the through hole.

When the compression coil spring 41b is located at the top, the force that acts in the direction that pushes the other end in the radial direction of the outer circumferential surface of the outer ring 16h against the other stepped surface 25 becomes the sum of the traction force (2Ft) and the force corresponding to the weight of the trunnion 7g and the outer ring 16h. However, when the compression coil spring 41a is located on the bottom, in order for the compression coil spring 41a to support the weight of the trunnion 7g and the outer ring 16h, the force that acts in a direction that pushes the other end section in the radial direction of the outer circumferential surface of the outer ring against the other stepped surface becomes the difference between the traction force and the force corresponding to the weight of the trunnion 7g and the outer ring 16h. Therefore, preferably, when the compression coil spring 41a is located on the bottom, a compression coil spring having an elastic force that is larger than when the compression coil spring 41b is located on the top by twice the weight of the trunnion and outer ring is used. When the trunnion 7g is arranged in the up/down direction, by providing a difference of twice the weight to the elastic force of left and right plate springs 41a, 41b, the force pushing the left and right trunnions 7g becomes the same, and design having good balance is achieved.

The same kind of part is used as the pressure piece 31 and the anchor piece 32 (parts that have the same shape and dimensions). The anchor piece supports the force 2Ft during operation of the toroidal continuously variable transmission. Furthermore, when the outer ring 16h pivotally displaces around the support beam section 9g, the anchor piece 32 has sliding contact with the outer circumferential surface of the outer ring 16h. Since it is necessary for the anchor piece 32 to support the force 2Ft, the anchor piece 32 is made of a metal that has a large yield stress and has excellent resistance to compression. Moreover, in order that the pivotal displacement is performed smoothly, preferably, the anchor piece 32 is made of a material having a low friction coefficient. Taking these things into consideration, the anchor piece 32 and the pressure piece 31 are made using a material having low friction such as oil-impregnated metal.

Furthermore, the area of sliding contact between the sliding-side flat surface 36 of the anchor piece 32 and the outer circumferential surface of the outer ring 16h must allow pivotal displacement of the outer ring 16h around the support beam section 9g with a force 2Ft is applied. Therefore, in order to keep the contact pressure at the area of sliding contact low, preferably a pair of parallel flat surfaces is formed at two locations on opposite sides in the radial direction of the outer ring 16h, and sliding contact is made between these flat surfaces and the sliding-side flat surface 36.

During operation of the toroidal continuously variable transmission of this example, in a state of transmitting power from the engine to the drive wheels, the direction that force acts on the outer ring 16h coincides with the force 2Ft and the force of the compression coil springs 41a, 41b. Therefore, the positional relationship between the trunnion 7g and the outer ring 16h is uniquely set. In other words, regardless of the difference between the total of the outer diameter (or space) do and the thickness t of the main section 33 of the pressure piece 31 and anchor piece 32, and the distance D (D - d_{O} - 2t), the outer ring 16h does not displace with respect to the trunnion 7g in the axial direction of the support beam 9g. Therefore, the occurrence of speed change operation that is not directly related to the driving operation is prevented, and it is possible to stabilize the speed change operation. Moreover, the difference (D - d_{O} - 2t) is sufficiently maintained so even when transmitting a large torque, it is possible for the outer ring 16h to smoothly displace pivotally with respect to the trunnion 7g.

During braking (during an engine brake operation), the direction in which the force 2Ft acts and the directions in which the spring forces of the compression coil springs 41a, 41b act are reversed. However, even in this case, as long as the spring forces 41a, 41b of the compression coil springs 41a, 41b are somewhat large, the sliding-side flat surface 36 of the anchor piece 32 and the outer circumferential surface of the outer ring 16h remain in contact, so it is possible to stabilize the speed change operation. As the force 2Ft that is applied during braking becomes large, there is a possibility that speed change operation not directly related to the driving operation will occur, however, in that case, the torque that passes through the toroidal continuously variable transmission is large, so during braking, there is hardly any problem with an uncomfortable feeling being given to the driver.

### [Embodiment 2, Example 2]

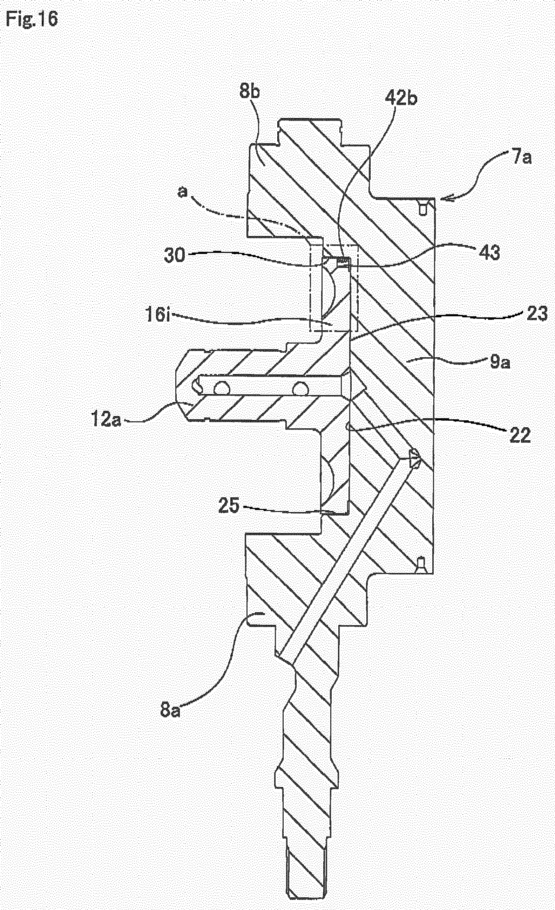

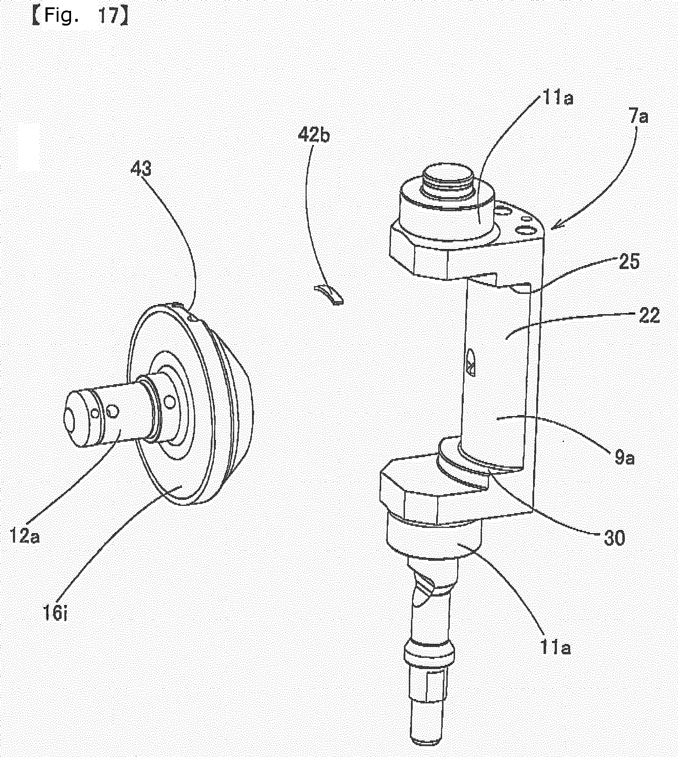

FIG. 16 to FIG. 20 illustrate a second example of the second embodiment of the present invention. In this example, plate springs 42a, 42b (only plate spring 42b is illustrated) as elastic members are directly placed between one of the pair of stepped surfaces 25 that are formed in the trunnion 7a and one end section in the radial direction of the outer circumferential surface of the outer ring 16i. The other stepped surface (the lower stepped surface in FIG. 16) and the other end section in the radial direction of the outer circumferential surface of the outer ring 16i come in direct contact. In this example, there is no pressure piece or anchor piece.

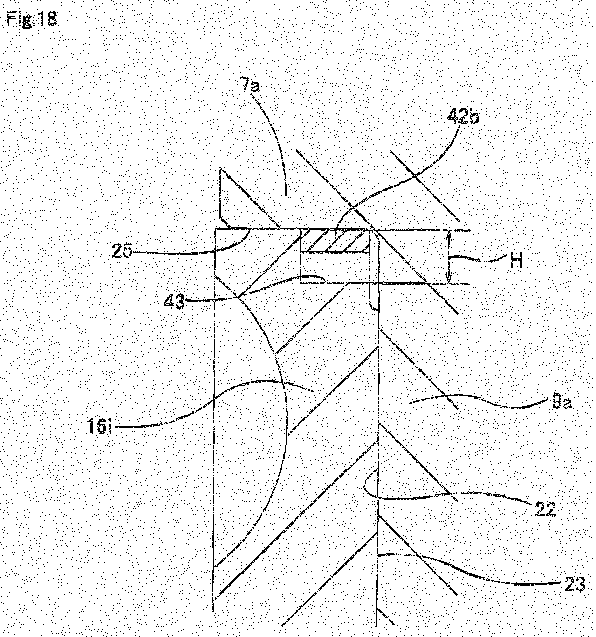

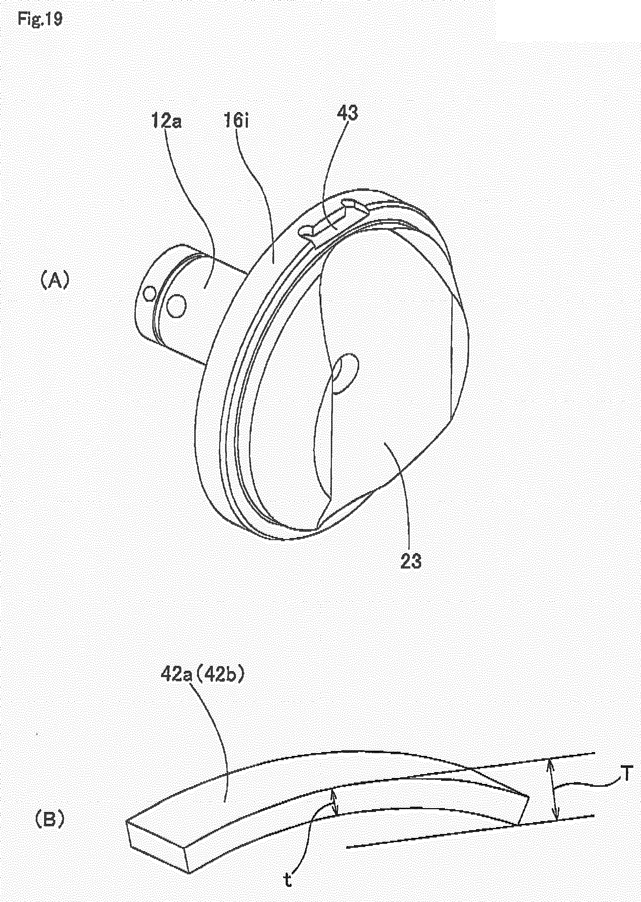

The plate springs 42a, 42b are formed by bending band shaped elastic metal plate such as spring steel into a partial arc shape. In order to install the plate springs 42a, 42b, a support concave section 43 is formed in the portion on the one end section in the radial direction of the outer circumferential surface of the outer ring 16i that faces the one stepped surface 25. The support concave section 43 is recessed inward in the radial direction further than the adjacent portions in the circumferential direction by removing part of the support concave section 43, and the bottom is a flat surface. The depth H (FIG. 18) in the radial direction of the support concave section 43 is shallower than the thickness T in the free state of the plate springs 42a, 42b, and is deeper than the thickness t of the elastic metal plate of the plate springs 42a, 42b (FIG. 19B) (T > H > t).

Therefore, when the plate springs 42a, 42b are placed inside the support concave section 43 in a state such that both end sections are in contact with the bottom surface of the support concave section 43, in the free state of the plate springs 42a, 42b, the center sections (convex curved surfaces) of the plate springs 42a, 42b sufficiently protrude further outward in the radial direction than the outer circumferential surface of the outer ring 16i by an amount greater than the difference between the distance between stepped surfaces 25 and the outer diameter of the outer ring 16i. In this state, the other end section in the radial direction of the outer circumferential surface of the outer ring 16i comes in contact with the other stepped surface 25 without a space. FIG. 16 illustrates the portion corresponding to FIG. 15B in the first example of the second embodiment, so the plate spring 42b is provided on the top of the outer ring 16i and pushes downward on outer ring 16i. On the other hand, in regards to the portion that corresponds to FIG. 15A, the plate spring 42a (not illustrated in the figure) is provided on the bottom of the outer ring 16i and pushes upward on the outer ring 16i. When the trunnion 7a is arranged in the up/down direction, the preferable point of making the forces pressing on the left and right of the trunnion equal by providing a difference of twice the weight to the spring forces of the left and right plate springs 42a, 42b is the same as in the case of the compression coil springs 41a, 41b of the first example of the second embodiment.

In this example, the relationship between the direction of rotation of the input disk 2 and the output disk 5 and the direction the plate springs 42a, 42b press the outer ring 16i is the same as in the first example of the second embodiment, so it is possible to prevent the occurrence of speed change operation that is not directly related to the driving operation, and to stabilize the speed change operation. In this example, the construction is simpler in comparison with the first example of the second embodiment, and the construction can be more compact and have a lower cost.

When the outer ring 16i displaces due to a large force in a direction opposite the direction of the spring force from the plate springs 42a, 42b, such as in the case of a strong engine brake, the amount of deflection (the amount of elastic compression) of the plate springs 42a, 42b becomes large. In this case as well, the relationship between the depth D of the support concave section 43 and the thickness t of the elastic metal plate is such that the plate springs 42a, 42b do not become completely depressed. Therefore, it is possible to sufficiently maintain the durability of the plate springs 42a, 42b. In other words, it is known that when the complete depressed state is repeated, a metal spring such as a plate spring loses its strength comparatively quickly, and the spring force decreases, however, with the construction of this example, it is possible to prevent the loss of spring strength due to this cause.

### [Embodiment 2, Example 3]

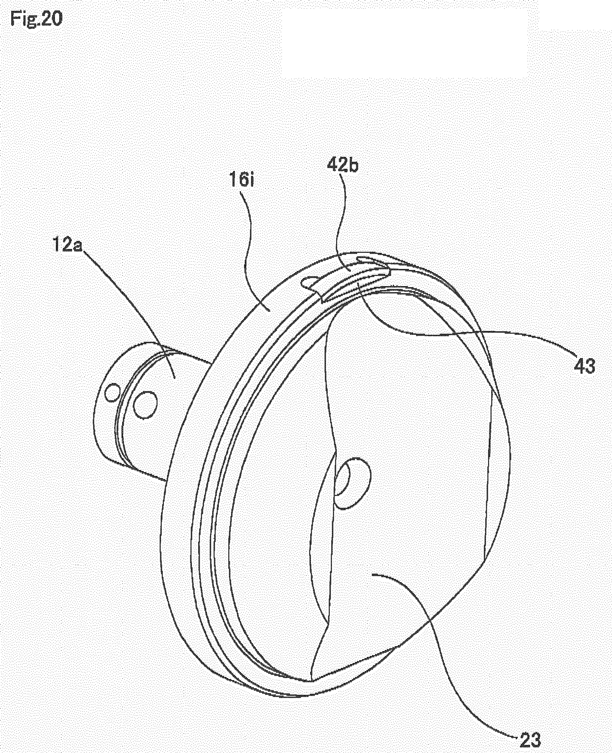

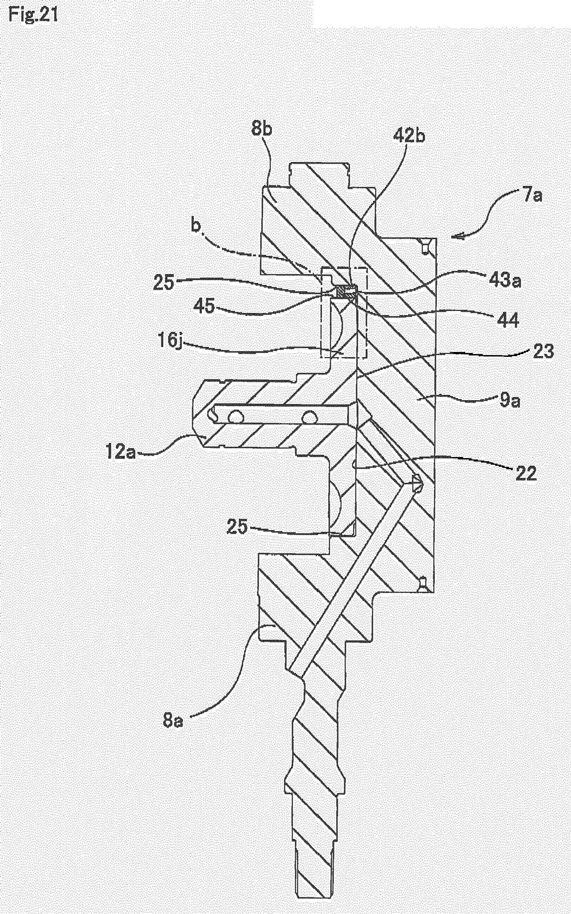

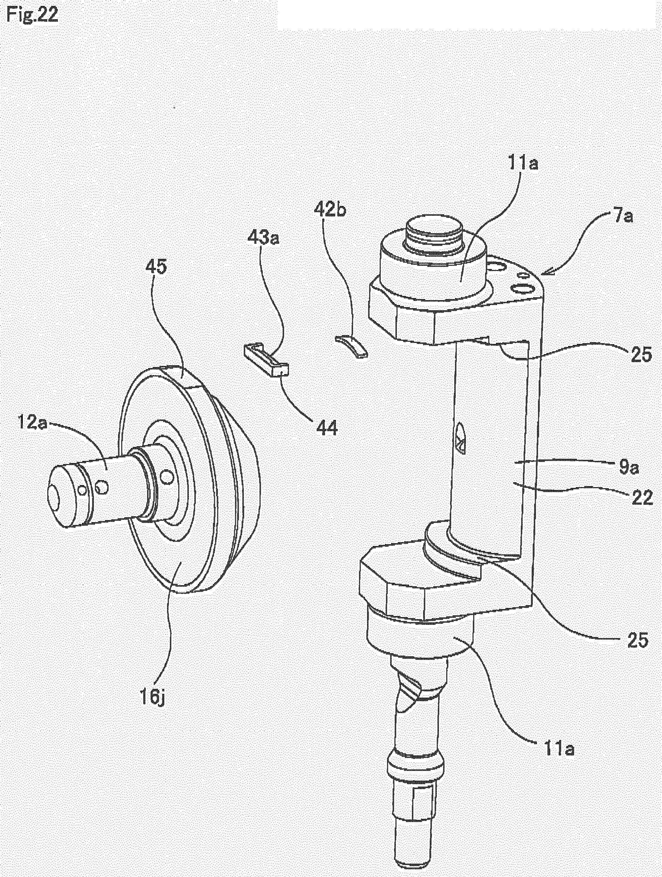

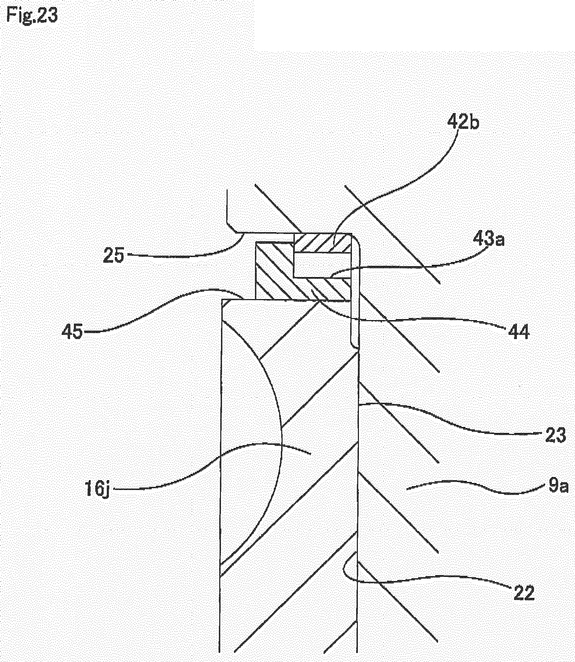

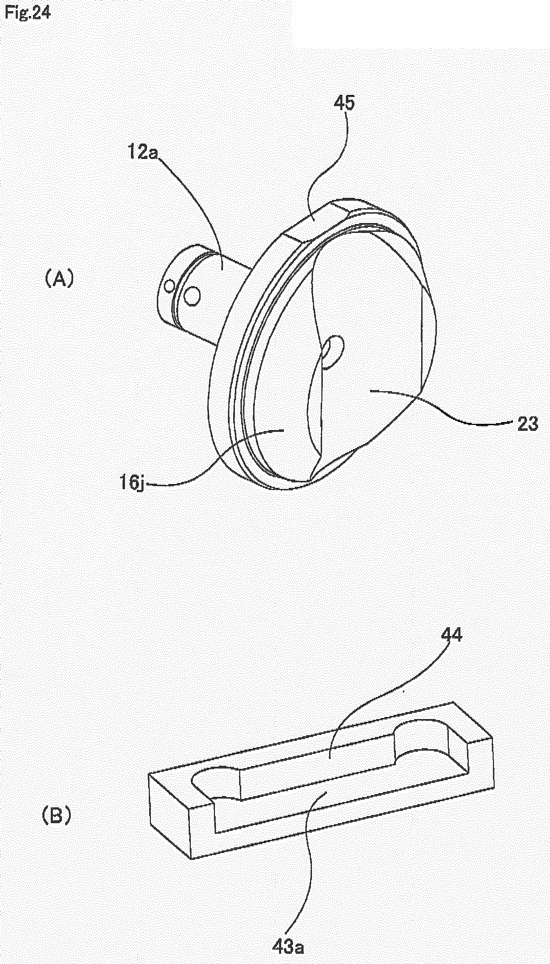

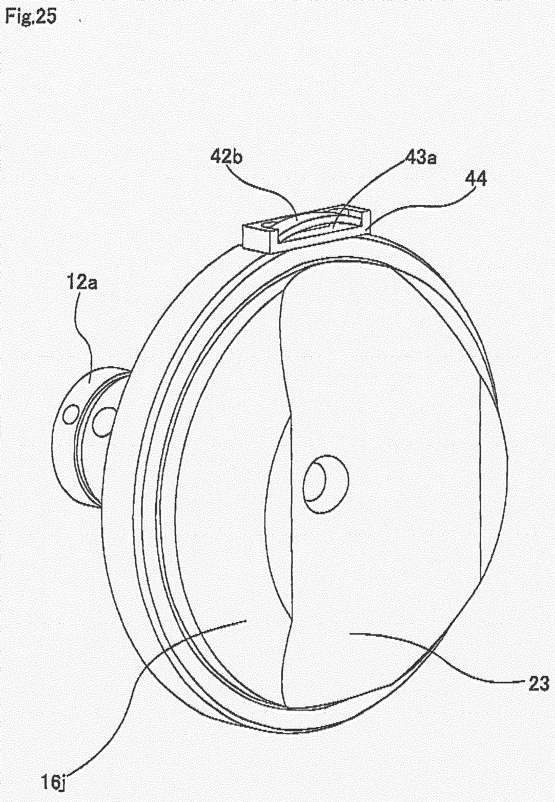

FIG. 21 to FIG. 25 illustrate a third example of the second embodiment of the present invention. In the case of this example as well, plate springs 42a, 42b that are formed by bending elastic metal plate into a partial circular arc shape are used. Particularly, in this example, plat springs 42a, 42b are installed in the portion of the outer circumferential surface of the outer ring 16j that faces one of the stepped surfaces 25 by way of a spring holder 44. This spring holder 44 is made of a material such as a sintered oil-impregnated metal having excellent resistance to compression and wear, and a low friction coefficient. A support concave section 43a having the same shape and dimensions as the support concave section 43 (FIG. 19 and FIG. 20) that was formed on the outer circumferential surface of the outer ring 16i in the second example of the second embodiment is formed in this spring holder 44. Moreover, of the spring holder 44, the surface that is opposite the surface where the support concave section 43a is formed is a flat surface.

In this example, in order to install the spring holder 44, a flat surface 45 that is parallel with the one stepped surface 25 is formed in the portion of the outer circumferential surface of the outer ring 16j that faces this one stepped surface 25. The spring holders 44 and plate spring 42a, 42b are placed in between the flat surface 45 and the stepped surface 25 in order from the flat surface 45. The spring force of the plate spring 42a, 42b elastically pushes the outer ring 16j toward the other stepped surface 25. A stopper mechanism (omitted in the drawings) is provided in between the spring holder 44 and the outer ring 16j or trunnion 7a in order to prevent the spring holder 44 from coming out from between the flat surface 45 and the stepped surface 25.

In this example, the spring holder 44 is provided independently from the outer ring 16j, so when compared with the case of directly forming a support concave section 43 (FIG. 16 to FIG. 20) in the outer ring 16j that is made of a hard metal such as bearing steel, this construction has a slight disadvantage from the aspect of being compact and lightweight, however, in addition to processing becoming easier, the freedom of selecting materials for the portion where the spring is installed becomes higher.

### [Embodiment 2, Example 4]

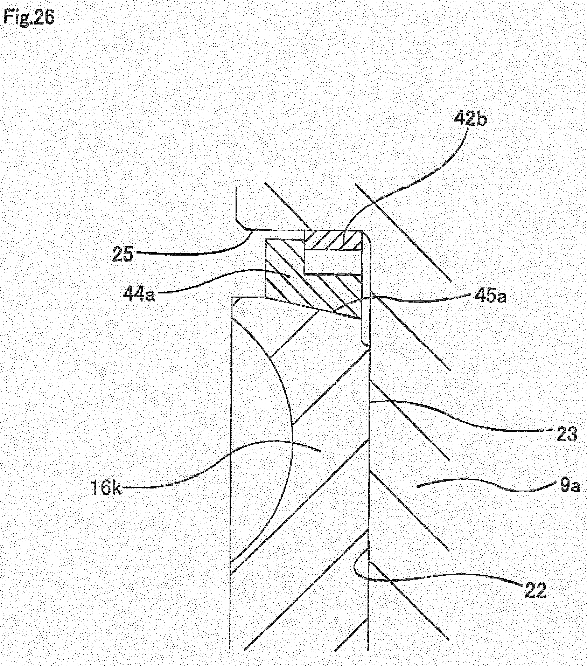

FIG. 26 illustrates a fourth example of a second embodiment of the present invention. In this example, the flat surface 45a that is formed on the outer circumferential surface of the outer ring 16k for installing the spring holder 44a is inclined in the radial direction of the outer ring 16k. More specifically, the flat surface 45a is formed in the tangential direction with respect to the outer circumferential surface of the outer ring 16k, however, is inclined in a direction such that the space that is formed between the flat surface 45a and the one stepped surface 25 that is formed in the trunnion 7a becomes wider going toward the side of the support beam section 9a. The one surface of the spring holder 44a that is placed between the flat surface 45a and the stepped surface 25 is also inclined in the same direction. With the construction of this example, the holder 44a is prevented from coming out from between the flat surface 45a and the stepped surface 25 in a direction going away from the support beam section 9a. The other construction and functions are the same as in the third example of the second embodiment.

### [Embodiment 3, Example 1]

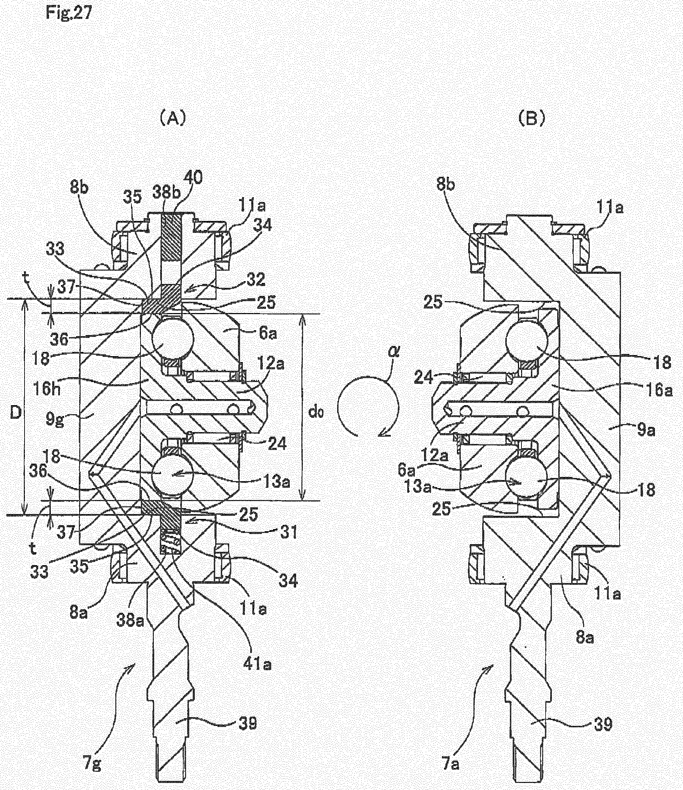

FIGS. 27A and 27B illustrate an example of the third embodiment. A feature of this third embodiment of the present invention relates to the second example of conventional construction, and is in the point of providing a torque support section for suppressing displacement of the outer ring 16a, 16h of a thrust ball bearing 13a, which supports a power roller 6a so as to be able to rotate freely around the support beam sections 9a, 9g formed in trunnions 7a, 7g, in the axial direction of the support beams section 9a, 9g in only the trunnion 7g that supplies feedback control for the transmission ratio.

Providing a torque support section for suppressing displacement of the outer ring 16h in the axial direction of the support beam section 9g is tied to increased cost, however, by providing this torque support section in only the trunnion for feedback control of a transmission ratio control valve, it is possible to suppress the increase in cost. In other words, in this example, the inclination angle of the trunnions 7a, 7g around the center axis of the tilt shafts 8a, 8b, which is related to the transmission ratio is controlled by a transmission ratio control valve 46 (FIG. 30) that controls the supply of hydraulic oil to the actuator 21, and adjustment of the opened/closed state of this transmission ratio control valve 46 is performed by transmitting the displacement of one trunnion 7g of a plurality of trunnions 7a, 7g to the component members of the transmission ratio control valve 46. In this trunnion 7g, the space between stepped surfaces 35 that are formed on both end sections in the axial direction of the support beam section 9g of the trunnion 7g is greater than the dimension in the same direction of the outer ring 16h, and a torque support section is provided only in this trunnion 7g.

In this case, in regards to the trunnion 7a in which a torque support section is not provided between the trunnion 7a and the outer ring 16a, there is a possibility that the power roller 6a will shift a little in the direction of rotation of the input disk 2 and output disk 5. However, the trunnion 7a in which there is no torque support section is not used for controlling the transmission ratio, and because the amount of shifting is small, the inclination angle of the trunnion 7a follows the inclination angle of the trunnion 7g in which the torque support section is provided, so the inclination angle of all of the trunnions 7a, 7g coincide.

As the detailed construction of this torque support section, construction for causing a protrusion formed on the support beam section side to fit with a concave groove that is formed on the outer ring side, construction for causing an anchor piece that is fastened to the support beam section side to fit with an anchor groove on the outer ring side, and construction for placing a plurality of balls between rolling grooves that are formed in the portions of the cylindrical convex surface on the support beam section side and the concave section on the outer ring side that are aligned with each other, are all disclosed in JP2008-25821(A).

However, in the construction of this example, as illustrated in FIG. 27A, preferably the construction described in the first example of the second embodiment (FIG. 15A) is employed. It is not illustrated in the figures, however, it is also possible to alternatively or additionally construct the torque support section that is provided in only the trunnion 7g by the anchor pins 26, 26a and the anchor groove 27 that engages with part of the anchor pins 26, 26a of the first embodiment.

In the present invention, in addition to the relationship between the third embodiment and the first and second embodiments, the construction of each of the examples of the first through third embodiments and the CVT disclosed by FIG. 1 to 9 can be alternatively or additionally combined and applied with each other as long as there is no contradiction with each other.

### [Industrial Applicability]

The half toroidal continuously variable transmission of the present invention can be widely applied to use in an automatic transmission for a vehicle, including an automobile, an automatic transmission for construction equipment, an automatic transmission for a generator used in aircraft such as fixed wing aircraft, rotary wing aircraft and blimps, an automatic transmission for adjusting the operation speed of various kinds of industrial equipment such as pumps and the like, and the contribution of the present invention to related industries will be large. The toroidal continuously variable transmission of the present invention can be used alone, however, can also be applied to a continuously variable transmission apparatus that is combined with a planetary gear mechanism.

### [Explanation of Reference Numbers]

1 Input rotating shaft
2 Input disk
3 Output cylinder
4 Output gear5 Output disk
6, 6a Power roller
7, 7a, 7b, 7c, 7d, 7e, 7f, 7g Trunnion
8, 8a, 8b Inclined shaft
9, 9a, 9b, 9c, 9d, 9e, 9f, 9g Support beam section
10 Support plate
11, 11a Radial bearing
12, 12a Support shaft
13, 13a Thrust ball bearing
14 Thrust needle roller bearing
15 Inner raceway
16, 16a, 16b, 16c, 16d, 16e, 16f, 16g, 16h, 16i, 16j, 16k Outer ring
17 Outer raceway
18 Ball
19 Drive shaft
20 Pressure apparatus
21 Actuator
22, 22a, 22b, 22c, 22d, 22e Cylindrical convex surface
23, 23a, 23b, 23c, 23d, 23e, 23f Concave section
24 Radial needle roller bearing
25 Stepped surface
26, 26a Anchor pin
27 Anchor groove
28, 28a Support hole
29 Downstream side lubrication oil channel
30 Upstream side lubrication oil channel
31 Pressure piece
32 Anchor piece
33 Main section
34 Convex section
35 Stationary-side flat surface
36 Sliding-side flat surface
37 Concave curved surface
38a, 38b Support hole
39 Rod
40 Plug
41a, 41b Compression coil spring
42a, 42b Plate spring
43, 43a Support concave section
44, 44a Spring holder
45, 45a Flat surface
46 Transmission control valve
47 Stepping motor
48 Precess cam
49 Spool
50 Sleeve
51 Hydraulic pressure source
52a, 52b Hydraulic chamber
53 Rod
54 Link arm
55 Synchronization cable

## Claims

1. A toroidal continuously variable transmission, comprising:
input and output disks (2, 5) that are concentrically supported so as to be able to be able to freely rotate relative to each other;
a plurality of trunnions (7f), each of which comprises: a pair of tilt shafts (8b) that are concentrically provided on both end sections of the trunnion (7f) and having a center axis that is at a position torsionally shifted with respect to the center axis of the input and output disk (2, 5); and a support beam section (9f) that extends between these tilt shafts (8b), and comprises a side surface on the inside in the radial direction of the input and output disks (2, 5), the side surface composed of a cylindrical convex surface (22e) having a center axis that is parallel with the center axis of the tilt shafts (8b) and that is located further on the outside in the radial direction of the input and output disks (2, 5) than the center axis of the tilt shafts (8b); and is provided between the input and output disks (2, 5) in the axial direction of these disks, and can pivotally displace freely around the center axis of the pair of tilt shafts (8b),
a plurality of power rollers (6a) that are held between the input and output disks (2, 5), and comprise a side surface on the outside in the radial direction of the input and output disks (2, 5) on which an inner raceway (15) is formed; and
a plurality of thrust rolling bearings (13a) that comprise: an outer ring (16f, 16g) that has a concave section (23e, 23f) formed on the outside in the radial direction of the input and output disk (2, 5) and can fit with the cylindrical convex surface (22e) of the support beam section (9f), and a side surface on the inside in the radial direction of the input and output disk (2, 5) and on which an outer raceway (17) is formed; and a plurality of rolling bodies (18) that are located between the outer raceway (17) of this outer ring (16f, 16g) and the inner raceway (15) of the power roller (6a) so as to be able to roll freely;
whereby each of the thrust rolling bearings (13a) is supported by each of the trunnions (7f) with the concave section (23e, 23f) fitted with the cylindrical convex surface (22e) of the support beam section (7f) such that pivotal displacement in the axial direction of the input and output disks (2, 5) is possible, and each of the power rollers (6a) is supported on the inside in the radial direction of the input and output disks (2, 5) of each of the trunnion (7f) by way of the thrust rolling bearing (13a) so as to be able to rotate freely; **characterized in that** each of the outer rings (16f, 16g) is provided with a support hole (28, 28a) having a circular cross section and formed in part of each of the outer rings (16f, 16g), and a column shaped anchor pin (26, 26a) that is fitted into and fastened inside the support hole (28, 28a) with an interference fit, with part protruding from the inside surface of the concave section (23e, 23f) of each of the outer rings (16f, 16g); and the support beam section (9f) of each of the trunnions (7f) provided with an anchor groove (27) that is formed on the cylindrical convex surfaces (22e) in the circumferential direction thereof; and the part of the anchor pin (26, 26a) and the anchor groove (27) are engaged such that torque that is applied to the power roller (6a) as the input and output disks (2, 5) rotate can be supported by the engagement section between the anchor pin (26, 26a) and anchor groove (27).

2. The toroidal continuously variable transmission according to claim 1, wherein
the support hole (28) is formed at a position torsionally shifted around the center axis of the concave section (23e) at a right angle to the direction of that center axis, and the middle section of the support hole (28) is open in the middle section in the width direction of the concave section (23e);
the anchor pin (26) is such that with the portions near both end sections in the axial direction fitted and fastened inside the support hole (28) with an interference fit, the middle section in the axial direction of the anchor pin (26) is exposed to part of the concave section (23e);
the anchor groove (27) has a circular arc shaped cross section and fits with the middle section in the axial direction of the anchor pin (26) so that there is no vibration or movement; and
together with separating the outer circumferential surface on both ends of the outer ring (16f) from part of the trunnion (7f) in the axial direction of the support beam section (9f) of the trunnion (7f), torque that is applied to the power roller (6a) as the input and output disks (2, 5) rotate is supported by the engagement section between the middle section in the axial direction of the anchor pin (26) and the anchor groove (27).

3. The toroidal continuously variable transmission according to claim 2, wherein
a support shaft (12a) that is concentric with the outer raceway (17) is integrally formed with the outer ring (16f) in the center section of the inside surface of the outer ring (16f);
the power roller (6a) is provided around this support shaft (12a) so as to be able to rotate freely by way of a radial needle roller bearing (24);
lubrication oil can be fed to a downstream-side lubrication oil channel (29) that is formed in the center section of the support shaft (12a) from an upstream-side lubrication oil channel (30) that is formed in the support beam section (9f) of the trunnion (7f);
the support hole (28) and the anchor groove (27) are formed at positions that are separated from the center of the support shaft (12a) in the axial direction of the support beam section (9f); and
the middle section in the axial direction of the anchor pin (26) exists in a portion that is separated from the connection section between the downstream-side lubrication oil channel (29) and the upstream-side lubrication oil channel (30).

4. The toroidal continuously variable transmission according to claim 1, wherein
support holes (28a) are formed at two locations in the width direction of the concave section (23f) at positions in the axial direction of the center axis of the concave section (23f) that coincide with each other; and
an anchor pin (26a) is pressure fitted into each support hole (28a) such that the end section of each anchor pin (26a) protrudes from the inner surface of the concave section (23f).

5. A toroidal continuously variable transmission, comprising:
input and output disks (2, 5) that are concentrically supported so as to be able to be able to freely rotate relative to each other;
a plurality of trunnions (7a, 7g), each of which comprises: a pair of tilt shafts (8b) that are concentrically provided on both end sections of the trunnion (7a, 7g) and having a center axis that is at a position torsionally shifted with respect to the center axis of the input and output disk (2, 5); and a support beam section (9a, 9g) that extends between these tilt shafts (8b), and comprises a side surface on the inside in the radial direction of the input and output disks (2, 5), the side surface composed of a cylindrical convex surface (22) having a center axis that is parallel with the center axis of the tilt shafts (8b) and that is located further on the outside in the radial direction of the input and output disks (2, 5) than the center axis of the tilt shafts (8b); and is provided between the input and output disks (2, 5) in the axial direction of these disks, and can pivotally displace freely around the center axis of the pair of tilt shafts (8b),
a plurality of power rollers (6a) that are held between the input and output disks (2, 5), and comprise a side surface on the outside in the radial direction of the input and output disks (2, 5) on which an inner raceway (15) is formed; and
a plurality of thrust rolling bearings (13a) that comprise: an outer ring (16h-16k) that has a concave section (23) formed on the outside in the radial direction of the input and output disk (2, 5) and can fit with the cylindrical convex surface (22) of the support beam section (9a, 9g), and a side surface on the inside in the radial direction of the input and output disk (2, 5) and on which an outer raceway (17) is formed; and a plurality of rolling bodies (18) that are located between the outer raceway (17) of this outer ring (16h-16k) and the inner raceway (15) of the power roller (6a) so as to be able to roll freely;
whereby each of the power rollers (6a) is supported on the inside in the radial direction of the input and output disks (2, 5) of each of the trunnion (7a, 7g) by way of the thrust rolling bearing (13a), and each of the thrust rolling bearings (13a) is supported by each of the trunnions (7a, 7g) with the concave section (23) fitted with the cylindrical convex surface (22) of the support beam section (9a, 9g) and with part of the outer circumferential surface thereof engaged with stepped surfaces (25) that are formed in part of the trunnion (7a, 7g) on both sides of the cylindrical convex surface (22) such that pivotal displacement in the axial direction of the input and output disks (2, 5) is possible and torque that is applied to the power roller (6a) as the disks rotate can be supported; **characterized in that** the space between the pair of stepped surfaces (25) that are formed in each trunnion (7a, 7g) is greater than the outer diameter of the outer ring (16h-16k), an elastic member (41a, 41b, 42a, 42b) is arranged in the portion between one of the stepped surfaces (25) and the outer circumferential surface of the outer ring (16h-16k), and this elastic member (41a, 41b, 42a, 42b) pushes the outer ring (16h-16k) toward the other stepped surface (25).

6. The toroidal continuously variable transmission according to claim 5, wherein
the elastic member is a plate spring (42a, 42b) that is formed by bending an elastic metal plate into a partial arc shape;
a support concave section (43, 43a) is formed in a portion of the outer circumferential surface of the outer ring (16i) that faces the one stepped surface (25), this support concave section (43, 43a) being recessed further in the radial direction than the adjacent portions in the circumferential direction to a depth shallower than the thickness of the plate spring (42a, 42b) in the free state, and is deeper than the thickness of the elastic metal plate; and
the plate spring (42a, 42b) is placed in this support concave section (43, 43a).

7. The toroidal continuously variable transmission according to claim 5, wherein
the elastic member is a plate spring (42a, 42b) that is formed by bending an elastic metal plate into a partial circular arc shape;
there is a spring holder (44, 44a) having a support concave section (43a) on one surface that is shallower than the thickness of the plate spring (42a, 42b) in the free state, and deeper than the thickness of elastic metal plate;
a flat surface (45, 45a) is formed on a portion of the outer circumferential surface of the outer ring (16j, 16k) that faces the one stepped surface (25), and extends in the tangential direction of that portion;
the other surface of the spring holder (44, 44a) comes in contact with this flat surface (25); and
the plate spring (42a, 42b) is placed inside the support concave section.

8. The toroidal continuously variable transmission according to claim 5, wherein a pressure piece (31) is arranged in a portion between at least the one stepped surface (25) and the outer circumferential surface of the outer ring (16h), such that the elastic member (41a, 41b) pushes this pressure piece (31) toward the outer ring (16h).

9. A toroidal continuously variable transmission, comprising:
input and output disks (2, 5) that are concentrically supported so as to be able to be able to freely rotate relative to each other;
a plurality of trunnions (7a, 7g), each of which comprises: a pair of tilt shafts (8b) that are concentrically provided on both end sections of the trunnion (7a, 7g) and having a center axis that is at a position torsionally shifted with respect to the center axis of the input and output disk (2, 5); and a support beam section (9a, 9g) that extends between these tilt shafts (8b), and comprises a side surface on the inside in the radial direction of the input and output disks (2, 5), the side surface composed of a cylindrical convex surface (22) having a center axis that is parallel with the center axis of the tilt shafts (8b) and that is located further on the outside in the radial direction of the input and output disks (2, 5) than the center axis of the tilt shafts (8b); and is provided between the input and output disks (2, 5) in the axial direction of these disks, and can pivotally displace freely around the center axis of the pair of tilt shafts (8b),
a plurality of power rollers (6a) that are held between the input and output disks (2, 5), and comprise a side surface on the outside in the radial direction of the input and output disks (2, 5) on which an inner raceway (15) is formed; and
a plurality of thrust rolling bearings (13a) that comprise: an outer ring (16a, 16h) that has a concave section (23) formed on the outside in the radial direction of the input and output disk (2, 5) and can fit with the cylindrical convex surface (22) of the support beam section (9a, 9g), and a side surface on the inside in the radial direction of the input and output disk (2, 5) and on which an outer raceway (17) is formed; and a plurality of rolling bodies (18) that are located between the outer raceway (17) of this outer ring (16a, 16h) and the inner raceway (15) of the power roller (6a) so as to be able to roll freely;
whereby each of the thrust rolling bearings (13a) is supported by each of the trunnions (7a, 7g) with the concave section (23) fitted with the cylindrical convex surface (22) of the support beam section (9a, 9g) such that pivotal displacement in the axial direction of the input and output disks (2, 5) is possible, and each of the power rollers (6a) is supported on the inside in the radial direction of the input and output disks (2, 5) of each of the trunnion (7a, 7g) by way of the thrust rolling bearing (13a) so as to be able to rotate freely;
adjustment of the transmission ratio between the input and output disks (2, 5) is performed by an actuator (21) provided for each trunnion (7a, 7g) causing the trunnion (7a, 7g) to displace in the axial direction of the tilt shafts (8b), and causing the trunnion (7a, 7g) to pivotally displace around the tilt shafts (8b);
the inclination angles of the trunnions (7a, 7g) around the tilt shafts (8b), which are related to the transmission ratio, are controlled by transmission ratio control valves (46) that control the supply of hydraulic oil to the actuators (21), and adjustment of the opened/closed state of the transmission ratio control valves (46) is performed by transmitting the displacement of one of the plurality of trunnions (7a, 7g) to the component members of these transmission ratio control valves (46);
the space between the pair of stepped surfaces (25) that are formed in each trunnion (7a, 7g) on both end sections in the axial direction of the support beam section (9a, 9g) of the trunnion (7a, 7g) is greater than the dimension in the same direction of the outer ring (16a, 16h);
**characterized in that**
a torque support section is formed only between the one of the plurality of trunnions (7a, 7g) and the outer ring (16a, 16h) that is supported by this trunnion (7a, 7g) so as to be able to pivotally displace, the torque support section supporting the torque that is applied to the power roller (6a) that is supported by this trunnion (7a, 7g) as the input and output disks (2, 5) rotate with allowing the pivotal displacement of this outer ring (16a, 16h) with respect to the support beam section (9a, 9g) of this trunnion (7a, 7g) and preventing this outer ring (16a, 16h) from displacing in one axial direction of this support beam section (9a, 9g) and making displacement of the outer ring (16a, 16h) in the other axial direction of the support beam section (9a, 9g) with respect to the trunnion (7a, 7g) difficult; and
a pressure piece (31) and an elastic member (41a) are installed in the one trunnion (7g) in the portion between one of the stepped surfaces (25) and the outer circumferential surface of the outer ring (16h), and the torque support section is the other stepped surface (25) or a member (32) that is installed on the other stepped surface (25), and pushes the pressure piece (31) toward the outer ring (16h) by the elastic member (41a).

10. The toroidal continuously variable transmission according to claim 9, wherein
an anchor piece (32) having the same shape as the pressure piece (31) is provided in the one trunnion (7g) between the other stepped surface (25) and the outer circumferential surface of the outer ring (16h) as the member that is installed on the other stepped surface (25);
concentric support holes (38a, 38b) are formed in each stepped surface (25); each of pressure piece (31) and the anchor piece (32) comprises a main section (33) that is located between the stepped surface (25) and the outer circumferential surface of the outer ring (16h), and a convex section (34) that protrudes from the main section (33) on the surface opposite the power roller (6a); and
the convex section (34) of the pressure piece (31) and the anchor piece (32) fit inside the support holes (38a, 38b), such that the elastic member (41a) that is mounted inside one of the support holes (38a) pushes the pressure piece (31) against the outer circumferential surface of the outer ring (16h), which pushes the outer ring (16h) toward the anchor piece (32); and
the area of contact between the outer circumferential surface of the outer ring (16h) and the anchor piece (32) form the torque support section.

11. A toroidal continuously variable transmission, comprising:
input and output disks (2, 5) that are concentrically supported so as to be able to be able to freely rotate relative to each other;
a plurality of trunnions (7a, 7f), each of which comprises: a pair of tilt shafts (8b) that are concentrically provided on both end sections of the trunnion (7a, 7f) and having a center axis that is at a position torsionally shifted with respect to the center axis of the input and output disk (2, 5); and a support beam section (9a, 9f) that extends between these tilt shafts (8b), and comprises a side surface on the inside in the radial direction of the input and output disks (2, 5), the side surface composed of a cylindrical convex surface (22, 22e) having a center axis that is parallel with the center axis of the tilt shafts (8b) and that is located further on the outside in the radial direction of the input and output disks (2, 5) than the center axis of the tilt shafts (8b); and is provided between the input and output disks (2, 5) in the axial direction of these disks, and can pivotally displace freely around the center axis of the pair of tilt shafts (8b),
a plurality of power rollers (6a) that are held between the input and output disks (2, 5), and comprise a side surface on the outside in the radial direction of the input and output disks (2, 5) on which an inner raceway (15) is formed; and
a plurality of thrust rolling bearings (13a) that comprise: an outer ring (16a, 16f, 16g) that has a concave section (23, 23e, 23f) formed on the outside in the radial direction of the input and output disk (2, 5) and can fit with the cylindrical convex surface (22, 22e) of the support beam section (9a, 9f), and a side surface on the inside in the radial direction of the input and output disk (2, 5) and on which an outer raceway (17) is formed; and a plurality of rolling bodies (18) that are located between the outer raceway (17) of this outer ring (16a, 16f, 16g) and the inner raceway (15) of the power roller (6a) so as to be able to roll freely;
whereby each of the thrust rolling bearings (13a) is supported by each of the trunnions (7a, 7f) with the concave section (23, 23e, 23f) fitted with the cylindrical convex surface (22, 22e) of the support beam section (9a, 9f) such that pivotal displacement in the axial direction of the input and output disks (2, 5) is possible, and each of the power rollers (6a) is supported on the inside in the radial direction of the input and output disks (2, 5) of each of the trunnion (7a, 7f) by way of the thrust rolling bearing (13a) so as to be able to rotate freely;
adjustment of the transmission ratio between the input and output disks (2, 5) is performed by an actuator (21) provided for each trunnion (7a, 7f) causing the trunnion (7a, 7f) to displace in the axial direction of the tilt shafts (8b), and causing the trunnion (7a, 7f) to pivotally displace around the tilt shafts (8b);
the inclination angles of the trunnions (7a, 7f) around the tilt shafts (8b), which are related to the transmission ratio, are controlled by transmission ratio control valves (46) that control the supply of hydraulic oil to the actuators (21), and adjustment of the opened/closed state of the transmission ratio control valves (46) is performed by transmitting the displacement of one of the plurality of trunnions (7a, 7f) to the component members of these transmission ratio control valves (46);
the space between the pair of stepped surfaces (25) that are formed in each trunnion (7a, 7f) on both end sections in the axial direction of the support beam section (9a, 9f) of the trunnion (7a, 7f) is greater than the dimension in the same direction of the outer ring (16a, 16f, 16g);
**characterized in that**
a torque support section is formed only between the one of the plurality of trunnions (7a, 7f) and the outer ring (16a, 16f, 16g) that is supported by this trunnion (7a, 7f) so as to be able to pivotally displace, the torque support section supporting the torque that is applied to the power roller (6a) that is supported by this trunnion (7a, 7f) as the input and output disks (2, 5) rotate with allowing the pivotal displacement of this outer ring (16a, 16f, 16g) with respect to the support beam section (9a, 9f) of this trunnion (7a, 7f) and preventing this outer ring (16a, 16f, 16g) from displacing in axial direction of this support beam section (9a, 9f), and
the torque support section comprises:
a support hole (28, 28a) having a circular cross section that is formed in part of the outer ring (16f, 16g);
an column shaped anchor pin (26, 26a) that, when fitted and fastened inside the support hole (28, 28a) with an interference fit, part of the anchor pin (26, 26a) protrudes from the inside surface of the concave section (23e, 23f) of the outer ring (16f, 16g); and
an anchor groove (27) that is formed on the cylindrical convex surface (22e) of the support beam section (9f) of the one trunnion (7f) in the circumferential direction of the cylindrical convex surface (22e), and engages with part of the anchor pin (26, 26a).

12. The toroidal continuously variable transmission according to claim 11, wherein
the support hole (28) is formed at a position torsionally shifted with respect to the center axis of the concave section (23e) at a right angle to the direction of that center axis, and the middle section of the support hole (28) is open in the middle section in the width direction of the concave section (23e);
the anchor pin (26) is such that, with the portions near both end sections in the axial direction fitted and fastened inside the support hole (28) with an interference fit, the middle section in the axial direction of the anchor pin (26) is exposed to part of the concave section (23e);
the anchor groove (27) has a circular arc shaped cross section and fits with the middle section in the axial direction of the anchor pin (26) so that there is no vibration or movement; and
together with separating the outer circumferential surface on both ends of the outer ring (16f) from part of the trunnion (7f) in the axial direction of the support beam section (9f) of the trunnion (7f), the engagement section between the middle section in the axial direction of the anchor pin (26) and the anchor groove (27) form the torque support section.

13. The toroidal continuously variable transmission according to claim 11, wherein
support holes (28a) are formed at two locations in the width direction of the concave section (23f) at positions in the axial direction of the center axis of the concave section (23f) that coincide with each other; and
an anchor pin (26a) is pressure fitted into each support hole (28a) such that the end section of each anchor pin (26a) protrudes from the inner surface of the concave section (23f).

## Patentansprüche

1. Stufenlos variables Toroidgetriebe, umfassend:
Eingangs- und Ausgangsscheiben (2, 5), die konzentrisch so gelagert sind, dass sie in der Lage sind, sich in Bezug aufeinander frei zu drehen;
mehrere Zapfen (7f), von denen jeder umfasst: zwei Neigungswellen (8b), die konzentrisch an beiden Endabschnitten des Zapfens (7f) bereitgestellt sind und die eine Mittelachse aufweisen, die so positioniert ist, dass sie in Bezug auf die Mittelachse der Eingangs- und der Ausgangsscheibe (2, 5) torsionsverlagert ist; und einen Trägerbalkenabschnitt (9f), der sich zwischen diesen Neigungswellen (8b) erstreckt und der auf der in der radialen Richtung der Eingangs- und der Ausgangsscheibe (2, 5) inneren Seite eine Seitenfläche umfasst, wobei die Seitenfläche, die aus einer zylindrischen konvexen Oberfläche (22e) besteht, eine Mittelachse aufweist, die parallel zur Mittelachse der Neigungswellen (8b) ist und die in der radialen Richtung der Eingangs- und der Ausgangsscheibe (2, 5) weiter außen liegt als die Mittelachse der Neigungswellen (8b); und in der axialen Richtung der Eingangs- und der Ausgangsscheibe (2, 5) zwischen diesen Scheiben bereitgestellt ist und frei um die Mittelachse der beiden Neigungswellen (8b) schwenken kann,
mehrere Antriebswalzen (6a), die zwischen der Eingangs- und der Ausgangsscheibe (2, 5) gehalten werden und auf der in der radialen Richtung der Eingangs- und der Ausgangsscheibe (2, 5) äußeren Seite eine Seitenfläche umfassen, an der eine innere Laufbahn (15) ausgebildet ist; und
mehrere Axialwälzlager (13a), die umfassen: einen äußeren Ring (16f, 16g), der einen konkaven Abschnitt (23e, 23f) aufweist, der auf der in der radialen Richtung der Eingangs- und der Ausgangsscheibe (2, 5) äußeren Seite ausgebildet ist und mit der zylindrischen konvexen Oberfläche (22e) des Trägerbalkenabschnitts (9f) zusammenpassen kann, und eine Seitenfläche auf der in der radialen Richtung der Eingangs- und der Ausgangsscheibe (2, 5) inneren Seite, auf der eine äußere Laufbahn (17) ausgebildet ist; und mehrere Wälzkörper (18), die zwischen der äußeren Laufbahn (17) dieses äußeren Rings (16f, 16g) und der inneren Laufbahn (15) der Antriebswalze (6a) angeordnet sind, so dass sie in der Lage sind, frei zu rollen;
wobei
jedes von den Axialwälzlagern (13a) von jedem der Zapfen (7f) getragen wird, wobei der konkave Abschnitt (23e, 23f) mit der zylindrischen konvexen Oberfläche (22e) des Trägerbalkenabschnitts (7f) zusammengepasst ist, so dass eine Verschwenkung in der axialen Richtung der Eingangs- und der Ausgangsscheibe (2, 5) möglich ist, und jede von den Antriebswalzen (6a) auf der in der radialen Richtung der Eingangs- und der Ausgangsscheibe (2, 5) inneren Seite von jedem des Zapfens (7f) mittels des Axialwälzlagers (13a) getragen wird, so dass sie sich frei drehen kann; **dadurch gekennzeichnet, dass**
jeder von den äußeren Ringen (16f, 16g) versehen ist mit einem Lagerloch (28, 28a), das einen kreisförmigen Querschnitt aufweist und in einem Teil von jedem der äußeren Ringe (16f, 16g) ausgebildet ist, und einen säulenförmigen Ankerstift (26, 26a), der durch Presspassung in das Lagerloch (28, 28a) gepasst und darin befestigt wird, wobei ein Teil von ihm von der Innenfläche des konkaven Abschnitts (23e, 23f) von jedem der äußeren Ringe (16f, 16g) vorsteht; und der Trägerbalkenabschnitt (9f) von jedem der Zapfen (7f) mit einer Ankernut (27) versehen ist, die an den zylindrischen konvexen Oberflächen (22e) in deren Umfangsrichtung ausgebildet ist; und wobei der Teil des Ankerstifts (26, 26a) und die Ankernut (27) so in Eingriff stehen, dass ein Drehmoment, das an die Antriebswalze (6a) angelegt wird, während sich die Eingangs- und die Ausgangsscheibe (2, 5) drehen, durch den Eingriffsabschnitt zwischen dem Ankerstift (26, 26a) und der Ankernut (27) gestützt werden kann.

2. Stufenlos variables Toroidgetriebe nach Anspruch 1, wobei
das Lagerloch (28) an einer Stelle ausgebildet ist, die um die Mittelachse des konkaven Abschnitts (23e) in einem zur Richtung dieser Mittelachse rechten Winkel torsionsverlagert ist, und der mittlere Abschnitt des Lagerlochs (28) im in der Breitenrichtung des konkaven Abschnitts (23e) mittleren Abschnitt offen ist;
der Ankerstift (26) so ist, dass dann, wenn seine Abschnitte, die in der axialen Richtung in der Nähe seiner beiden Endabschnitte liegen, durch Presspassung in das Lagerloch (28) gepasst und darin befestigt sind, der in der axialen Richtung des Ankerstifts (26) mittlere Abschnitt einem Teil des konkaven Abschnitts (23e) gegenüber freiliegt;
die Ankernut (27) einen kreisbogenförmigen Querschnitt aufweist und mit dem in der axialen Richtung mittleren Abschnitt des Ankerstifts (26) so zusammenpasst, dass keine Vibration oder Bewegung stattfindet; und
wobei zusammen damit, dass die Außenumfangsfläche an beiden Enden des äußeren Rings (16f) von einem Teil des Zapfens (7f) in der axialen Richtung des Trägerbalkenabschnitts (9f) des Zapfens (7f) getrennt ist, ein Drehmoment, das an die Antriebswalze (6a) angelegt wird, während sich die Eingangs- und die Ausgangsscheibe (2, 5) drehen, von dem Eingriffsabschnitt zwischen dem in der axialen Richtung mittleren Abschnitt des Ankerstifts (26) und der Ankernut (27) gestützt wird.

3. Stufenlos variables Toroidgetriebe nach Anspruch 2, wobei
eine Trägerwelle (12a), die konzentrisch ist mit der äußeren Laufbahn (17), einstückig mit dem äußeren Ring (16f) im mittleren Abschnitt der Innenfläche des äußeren Rings (16f) ausgebildet ist;
die Antriebswalze (6a) um diese Stützwelle (12a) herum bereitgestellt ist, so dass sie in der Lage ist, sich mittels eines radialen Nadelwälzlagers (24) frei zu drehen;
Schmieröl von einem stromaufwärts gelegenen Schmierölkanal (30), der im Trägerbalkenabschnitt (9f) des Zapfens (7f) ausgebildet ist, in einen stromabwärts gelegenen Schmierölkanal (29) gespeist werden kann, der im mittleren Abschnitt der Trägerwelle (12a) ausgebildet ist;
das Lagerloch (28) und die Ankernut (27) an Positionen ausgebildet sind, die in der axialen Richtung des Trägerbalkenabschnitts (9f) von der Mitte der Trägerwelle (12a) getrennt sind; und
der in der axialen Richtung mittlere Abschnitt des Ankerstifts (26) in einem Abschnitt liegt, der vom Verbindungsabschnitt zwischen dem stromabwärts gelegenen Schmierölkanal (29) und dem stromaufwärts gelegenen Schmierölkanal (30) Seite getrennt ist.

4. Stufenlos variables Toroidgetriebe nach Anspruch 1, wobei
Lagerlöcher (28a) an zwei Stellen in der Breitenrichtung des konkaven Abschnitts (23f) an Positionen ausgebildet sind, die in der axialen Richtung der Mittelachse des konkaven Abschnitts (23f) zusammenfallen; und
ein Ankerstift (26a) in jedes der Lagerlöcher (28a) so pressgepasst ist, dass der Endabschnitt von jedem Ankerstift (26a) von der Innenfläche des konkaven Abschnitts (23f) vorsteht.

5. Stufenlos variables Toroidgetriebe, umfassend:
Eingangs- und Ausgangsscheiben (2, 5), die konzentrisch so gelagert sind, dass sie in der Lage sind, sich in Bezug aufeinander frei zu drehen;
mehrere Zapfen (7a, 7g), von denen jeder umfasst: zwei Neigungswellen (8b), die konzentrisch an beiden Endabschnitten des Zapfens (7a, 7g) bereitgestellt sind und die eine Mittelachse aufweisen, die so positioniert ist, dass die in Bezug auf die Mittelachse der Eingangs- und der Ausgangsscheibe (2, 5) torsionsverlagert ist; und einen Trägerbalkenabschnitt (9a, 9g), der sich zwischen diesen Neigungswellen (8b) erstreckt und der auf der in der radialen Richtung der Eingangs- und der Ausgangsscheibe (2, 5) inneren Seite eine Seitenfläche umfasst, wobei die Seitenfläche, die aus einer zylindrischen konvexen Oberfläche (22) besteht, eine Mittelachse aufweist, die parallel zur Mittelachse der Neigungswellen (8b) ist und in der radialen Richtung der Eingangs- und der Ausgangsscheibe (2, 5) weiter außen liegt als die Mittelachse der Neigungswellen (8b); und in der axialen Richtung der Eingangs- und der Ausgangsscheibe (2, 5) zwischen diesen Scheiben bereitgestellt ist und frei um die Mittelachse der beiden Neigungswellen (8b) schwenken kann,
mehrere Antriebswalzen (6a), die zwischen der Eingangs- und der Ausgangsscheibe (2, 5) gehalten werden und auf der in der radialen Richtung der Eingangs- und der Ausgangsscheibe (2, 5) äußeren Seite eine Seitenfläche umfassen, an der eine innere Laufbahn (15) ausgebildet ist; und
mehrere Axialwälzlager (13a), die umfassen: einen äußeren Ring (16h-16k), der einen konkaven Abschnitt (23) aufweist, der auf der in der radialen Richtung der Eingangs- und der Ausgangsscheibe (2, 5) äußeren Seite ausgebildet ist und mit der zylindrischen konvexen Oberfläche (22) des Trägerbalkenabschnitts (9a, 9g) zusammenpassen kann, und eine Seitenfläche auf der in der radialen Richtung der Eingangs- und der Ausgangsscheibe (2, 5) inneren Seite, auf der eine äußere Laufbahn (17) ausgebildet ist; und mehrere Wälzkörper (18), die zwischen der äußeren Laufbahn (17) dieses äußeren Rings (16h-16k) und der inneren Laufbahn (15) der Antriebswalze (6a) angeordnet sind, so dass sie in der Lage sind, frei zu rollen;
wobei
jede von den Antriebswalzen (6a) mittels des Axialwälzlagers (13a) an der in der radialen Richtung der Eingangs- und der Ausgangsscheibe (2, 5) inneren Seite jedes des Zapfens (7a, 7g) gelagert wird, und jedes von den Axialwälzlagern (13a) von jedem der Zapfen (7a, 7g) gelagert wird, wenn der konkave Abschnitt (23) mit der zylindrischen konkaven Oberfläche (22) des Trägerbalkenabschnitts (9a, 9g) zusammengepasst ist und wobei ein Teil seiner Außenumfangsfläche mit den gestuften Oberflächen (25), die in einem Teil des Zapfens (7a, 7g) auf beiden Seiten der zylindrischen konkaven Oberfläche (22) ausgebildet sind, in Eingriff steht, so dass eine Verschwenkung in der axialen Richtung der Eingangs- und der Ausgangsscheibe (2, 5) möglich ist und ein Drehmoment, das an die Antriebswalze (6a) angelegt wird, wenn sich die Scheiben drehen, gestützt werden kann; **dadurch gekennzeichnet, dass**
der Raum zwischen den beiden gestuften Oberflächen (25), die in jedem Zapfen (7a, 7g) ausgebildet sind, größer ist als der Außendurchmesser des äußeren Rings (16h-16k), ein elastisches Element (41a, 41b, 42a, 42b) an dem Abschnitt zwischen einer der gestuften Oberflächen (25) und der Außenumfangsfläche des äußeren Rings (16h-16k) angeordnet ist und dieses elastische Element (41a, 41b, 42a, 42b) den äußeren Ring (16h-16k) in Richtung auf die andere gestufte Oberfläche (25) schiebt.

6. Stufenlos variables Toroidgetriebe nach Anspruch 5, wobei
das elastische Element eine Tellerfeder (42a, 42b) ist, die durch Biegen einer elastischen Metallplatte in Form eines Teilbogens ausgebildet ist;
ein konkaver Trägerabschnitt (43, 43a) in einem Abschnitt der Außenumfangsfläche des äußeren Rings (16i), die der einen gestuften Oberfläche (25) gegenüberliegt, ausgebildet ist, wobei dieser konkave Trägerabschnitt (43, 43a) in der radialen Richtung weiter als die in der Umfangsrichtung angrenzenden Abschnitte eingetieft ist, und zwar auf eine Tiefe eingetieft, die flacher ist als die Dicke der Tellerfeder (42, 42b) im freien Zustand und tiefer ist als die Dicke der elastischen Metallplatte; und
die Tellerfeder (42, 42b) in diesem konkaven Trägerabschnitt (43, 43a) angeordnet ist.

7. Stufenlos variables Toroidgetriebe nach Anspruch 5, wobei
das elastische Element eine Tellerfeder (42a, 42b) ist, die durch Biegen einer elastischen Metallplatte in Form eines Teilkreisbogens ausgebildet ist;
eine Federhalterung (44, 44a) mit einem konkaven Trägerabschnitt (43a) an einer Oberfläche vorhanden ist, die flacher ist als die Dicke der Tellerfeder (42a, 42b) im freien Zustand, und tiefer ist als die Dicke der elastischen Metallplatte;
eine flache Oberfläche (45, 45a) an einem Abschnitt der Außenumfangsfläche des äußeren Rings (16j, 16k) ausgebildet ist, die der einen gestuften Oberfläche (25) gegenüberliegt und sich in der tangentialen Richtung dieses Abschnitts erstreckt;
die andere Oberfläche der Federhalterung (44, 44a) mit dieser flachen Oberfläche (25) in Kontakt kommt; und
die Tellerfeder (42, 42b) in dem konkaven Trägerabschnitt angeordnet ist.

8. Stufenlos variables Toroidgetriebe nach Anspruch 5, wobei ein Druckstück (31) in einem Abschnitt zwischen zumindest der einen gestuften Oberfläche (25) und der Außenumfangsfläche des äußeren Rings (16h) angeordnet ist, so dass das elastische Element (41a, 41b) dieses Druckstück (31) zum äußeren Ring (16h) hinschiebt.

9. Stufenlos variables Toroidgetriebe, umfassend:
Eingangs- und Ausgangsscheiben (2, 5), die konzentrisch so gelagert sind, dass sie in der Lage sind, sich in Bezug aufeinander frei zu drehen;
mehrere Zapfen (7a, 7g), von denen jeder umfasst: zwei Neigungswellen (8b), die konzentrisch an beiden Endabschnitten des Zapfens (7a, 7g) bereitgestellt sind und die eine Mittelachse aufweisen, die so positioniert ist, dass sie in Bezug auf die Mittelachse der Eingangs- und der Ausgangsscheibe (2, 5) torsionsverlagert ist; und einen Trägerbalkenabschnitt (9a, 9g), der sich zwischen diesen Neigungswellen (8b) erstreckt und der auf der in der radialen Richtung der Eingangs- und der Ausgangsscheibe (2, 5) inneren Seite eine Seitenfläche umfasst, wobei die Seitenfläche, die aus einer zylindrischen konvexen Oberfläche (22) besteht, eine Mittelachse aufweist, die parallel zur Mittelachse der Neigungswellen (8b) ist und in der radialen Richtung der Eingangs- und der Ausgangsscheibe (2, 5) weiter außen liegt als die Mittelachse der Neigungswellen (8b); und in der axialen Richtung der Eingangs- und der Ausgangsscheibe (2, 5) zwischen diesen Scheiben bereitgestellt ist und frei um die Mittelachse der beiden Neigungswellen (8b) schwenken kann,
mehrere Antriebswalzen (6a), die zwischen der Eingangs- und der Ausgangsscheibe (2, 5) gehalten werden und auf der in der radialen Richtung der Eingangs- und der Ausgangsscheibe (2, 5) äußeren Seite eine Seitenfläche umfassen, an der eine innere Laufbahn (15) ausgebildet ist; und
mehrere Axialwälzlager (13a), die umfassen: einen äußeren Ring (16a, 16h), der einen konkaven Abschnitt (23) aufweist, der auf der in der radialen Richtung der Eingangs- und der Ausgangsscheibe (2, 5) äußeren Seite ausgebildet ist und mit der zylindrischen konvexen Oberfläche (22) des Trägerbalkenabschnitts (9a, 9g) zusammenpassen kann, und eine Seitenfläche auf der in der radialen Richtung der Eingangs- und der Ausgangsscheibe (2, 5) inneren Seite, auf der eine äußere Laufbahn (17) ausgebildet ist; und mehrere Wälzkörper (18), die zwischen der äußeren Laufbahn (17) dieses äußeren Rings (16a, 16h) und der inneren Laufbahn (15) der Antriebswalze (6a) angeordnet sind, so dass sie in der Lage sind, frei zu rollen;
wobei
jedes von den Axialwälzlagern (13a) von jedem der Zapfen (7a, 7g) getragen wird, wenn der konkave Abschnitt (23) mit der zylindrischen konvexen Oberfläche (22) des Trägerbalkenabschnitts (9a, 9g) zusammengepasst ist, so dass eine Verschwenkung in der axialen Richtung der Eingangs- und der Ausgangsscheibe (2, 5) möglich ist, und jede von den Antriebswalzen (6a) auf der in der radialen Richtung der Eingangs- und der Ausgangsscheibe (2, 5) inneren Seite von jedem des Zapfens (7a, 7g) mittels des Axialwälzlagers (13a) so getragen wird, dass sie sich frei drehen kann;
eine Anpassung der Übersetzung zwischen der Eingangs- und der Ausgangsscheibe (2, 5) von einem Stellglied (21) durchgeführt wird, das für jeden Zapfen (7a, 7g) bereitgestellt ist und bewirkt, dass der Zapfen (7a, 7g) sich in der axialen Richtung der Neigungswellen (8b) verlagert, und bewirkt, dass der Zapfen (7a, 7g) um die Neigungswellen (8b) herum schwenkt;
die Neigungswinkel der Zapfen (7a, 7g) um die Neigungswellen (8b), die mit der Übersetzung in Beziehung stehen, durch Übersetzungssteuerventile (46) gesteuert werden, welche die Zufuhr von Hydrauliköl zu den Stellgliedern (21) steuern, und eine Anpassung des geöffneten/geschlossenen Zustands der Übersetzungssteuerventile (46) durch Übertragen der Verlagerung von einem von den mehreren Zapfen (7a, 7g) auf die Komponentenelemente dieser Übersetzungssteuerventile (46) durchgeführt wird;
der Raum zwischen den beiden gestuften Oberflächen (25), die in jedem Zapfen (7a, 7g) an beiden Endabschnitten in der axialen Richtung des Trägerbalkenabschnitts (9a, 9g) des Zapfens (7a, 7g) ausgebildet sind, größer ist als die Abmessung des äußeren Rings (16a, 16h) in der gleichen Richtung;
**dadurch gekennzeichnet, dass**
ein Drehmomentunterstützungsabschnitt nur zwischen dem einen von den mehreren Zapfen (7a, 7g) und dem äußeren Ring (16a, 16h), der von diesem Zapfen (7a, 7g) gelagert wird, ausgebildet ist, so dass er sich verschwenken kann, wobei der Drehmomentunterstützungsabschnitt das Drehmoment stützt, das an die Antriebswalze (6a) angelegt wird, die von diesem Zapfen (7a, 7g) gelagert wird, während sich die Eingangs- und die Ausgangsscheibe (2, 5) drehen, wobei die Verschwenkung dieses äußeren Rings (16a, 16h) in Bezug auf den Trägerbalkenabschnitt (9a, 9g) dieses Zapfens (7a, 7g) zugelassen wird und eine Verlagerung dieses äußeren Rings (16a, 16h) in einer axialen Richtung dieses Trägerbalkenabschnitts (9a, 9g) verhindert wird und die Verlagerung des äußeren Rings (16a, 16h) in der anderen axialen Richtung des Trägerbalkenabschnitts (9a, 9g) in Bezug auf den Zapfen (7a, 7g) erschwert wird; und
ein Druckstück (31) und ein elastisches Element (41a) in dem einen Zapfen (7g) in dem Abschnitt zwischen einer der gestuften Oberflächen (25) und der Außenumfangsfläche des äußeren Rings (16h) installiert sind, und der Drehmomentunterstützungsabschnitt die andere gestufte Oberfläche (25) oder ein Element (32) ist, das an der anderen gestuften Oberfläche (25) installiert ist, und das Druckstück (31) durch das elastische Element (41a) zum äußeren Ring (16h) schiebt.

10. Stufenlos variables Toroidgetriebe nach Anspruch 9, wobei
ein Ankerstück (32) mit der gleichen Form wie das Druckstück (31) in dem einen Zapfen (7g) zwischen der anderen gestuften Oberfläche (25) und der Außenumfangsfläche des äußeren Rings (16h) als das Element, das an der anderen gestuften Oberfläche (25) installiert ist, bereitgestellt ist;
konzentrische Lagerlöcher (38a, 38b) in jeder gestuften Oberfläche (25) ausgebildet sind;
sowohl das Druckstück (31) als auch das Ankerstück (32) einen Hauptabschnitt (33), der zwischen der gestuften Oberfläche (25) und der Außenumfangsfläche des äußeren Rings (16h) angeordnet ist, und einen konvexen Abschnitt (34), der vom Hauptabschnitt (33) an der Oberfläche, die der Antriebswalze (6a) gegenüberliegt, vorsteht, umfassen; und
der konvexe Abschnitt (34) des Druckstücks (31) und das Ankerstück (32) in die Lagerlöcher (38, 38b) passen, so dass das elastische Element (41a), das innerhalb von einem der Lagerlöcher (38a) montiert ist, das Druckstück (31) gegen die Außenumfangsfläche des äußeren Rings (16h) drückt, wodurch der äußere Ring (16h) zum Ankerstück (32) geschoben wird; und
die Kontaktfläche zwischen der Außenumfangsfläche des äußeren Rings (16h) und dem Ankerstück (32) den Drehmomentunterstützungsabschnitt bildet.

11. Stufenlos variables Toroidgetriebe, umfassend:
Eingangs- und Ausgangsscheiben (2, 5), die konzentrisch so gelagert sind, dass sie in der Lage sind, sich in Bezug aufeinander frei zu drehen;
mehrere Zapfen (7a, 7f), von denen jeder umfasst: zwei Neigungswellen (8b), die konzentrisch an beiden Endabschnitten des Zapfens (7a, 7f) bereitgestellt sind und die eine Mittelachse aufweisen, die sich an einer Position befindet, die in Bezug auf die Mittelachse der Eingangs- und der Ausgangsscheibe (2, 5) torsionsverlagert ist; und einen Trägerbalkenabschnitt (9a, 9f), der sich zwischen diesen Neigungswellen (8b) erstreckt und der auf der in der radialen Richtung der Eingangs- und der Ausgangsscheibe (2, 5) inneren Seite eine Seitenfläche umfasst, wobei die Seitenfläche, die aus einer zylindrischen konvexen Oberfläche (22, 22e) besteht, eine Mittelachse aufweist, die parallel zur Mittelachse der Neigungswellen (8b) ist und die in der radialen Richtung der Eingangs- und der Ausgangsscheibe (2, 5) weiter außen liegt als die Mittelachse der Neigungswellen (8b); und in der axialen Richtung der Eingangs- und der Ausgangsscheibe (2, 5) zwischen diesen Scheiben bereitgestellt ist und frei um die Mittelachse der beiden Neigungswellen (8b) schwenken kann,
mehrere Antriebswalzen (6a), die zwischen der Eingangs- und der Ausgangsscheibe (2, 5) gehalten werden und auf der in der radialen Richtung der Eingangs- und der Ausgangsscheibe (2, 5) äußeren Seite eine Seitenfläche umfassen, an der eine innere Laufbahn (15) ausgebildet sind; und
mehrere Axialwälzlager (13a), die umfassen: einen äußeren Ring (16a, 16f, 16g), der einen konkaven Abschnitt (23, 23e, 23f) aufweist, der auf der in der radialen Richtung der Eingangs- und der Ausgangsscheibe (2, 5) äußeren Seite ausgebildet ist und mit der zylindrischen konvexen Oberfläche (22, 22e) des Trägerbalkenabschnitts (9a, 9f) zusammenpassen kann, und eine Seitenfläche auf der in der radialen Richtung der Eingangs- und der Ausgangsscheibe (2, 5) inneren Seite, auf der eine äußere Laufbahn (17) ausgebildet ist; und mehrere Wälzkörper (18), die zwischen der äußeren Laufbahn (17) dieses äußeren Rings (16a, 16f, 16g) und der inneren Laufbahn (15) der Antriebswalze (6a) angeordnet sind, so dass sie in der Lage sind, frei zu rollen;
wobei
jedes von den Axialwälzlagern (13a) von jedem der Zapfen (7a, 7f) getragen wird, wobei der konkave Abschnitt (23, 23e, 23f) mit der zylindrischen konvexen Oberfläche (22, 22e) des Trägerbalkenabschnitts (9a, 9f) zusammengepasst ist, so dass eine Verschwenkung in der axialen Richtung der Eingangs- und der Ausgangsscheibe (2, 5) möglich ist, und jede von den Antriebswalzen (6a) auf der in der radialen Richtung der Eingangs- und der Ausgangsscheibe (2, 5) inneren Seite von jedem des Zapfens (7a, 7f) mittels des Axialwälzlagers (13a) so getragen wird, dass sie sich frei drehen kann;
eine Anpassung der Übersetzung zwischen der Eingangs- und der Ausgangsscheibe (2, 5) vom Stellglied (21) durchgeführt wird, das für jeden Zapfen (7a, 7f) bereitgestellt ist und bewirkt, dass der Zapfen (7a, 7f) sich in der axialen Richtung der Neigungswellen (8b) verlagert und bewirkt, dass der Zapfen (7a, 7f) um die Neigungswellen (8b) herum schwenkt;
die Neigungswinkel der Zapfen (7a, 7f) um die Neigungswellen (8b), die mit der Übersetzung in Beziehung stehen, durch Übersetzungssteuerventile (46) gesteuert werden, welche die Zufuhr von Hydrauliköl zu den Stellgliedern (21) steuern, und eine Anpassung des geöffneten/geschlossenen Zustands der Übersetzungssteuerventile (46) durch Übertragen der Verlagerung von einem von den mehreren Zapfen (7a, 7f) auf die Komponentenelemente dieser Übersetzungssteuerventile (46) durchgeführt wird;
der Raum zwischen den beiden gestuften Oberflächen (25), die in jedem Zapfen (7a, 7f) an beiden Endabschnitten in der axialen Richtung des Trägerbalkenabschnitts (9a, 9f) des Zapfens (7a, 7f) ausgebildet sind, größer ist als die Abmessung des äußeren Rings (16a, 16f, 16g) in der gleichen Richtung;
**dadurch gekennzeichnet, dass**
ein Drehmomentunterstützungsabschnitt nur zwischen dem einen von den mehreren Zapfen (7a, 7f) und dem äußeren Ring (16a, 16f, 16g), der von diesem Zapfen (7a, 7f) gelagert wird, so ausgebildet ist, dass er in der Lage ist, sich zu verlagern, wobei der Drehmomentunterstützungsabschnitt das Drehmoment stützt, das an die Antriebswalze (6a) angelegt wird, die von diesem Zapfen (7a, 7f) gelagert wird, während sich die Eingangs- und die Ausgangsscheibe (2, 5) drehen, wobei eine Verschwenkung dieses äußeren Rings (16a, 16f, 16g) in Bezug auf den Trägerbalkenabschnitt (9a, 9f) dieses Zapfens (7a, 7f) zugelassen wird und eine Verlagerung dieses äußeren Rings (16a, 16f, 16g) in einer axialen Richtung dieses Trägerbalkenabschnitts (9a, 9f) verhindert wird,
und
der Drehmomentunterstützungsabschnitt umfasst:
ein Lagerloch (28, 28a) mit einem kreisförmigen Querschnitt, das in einem Teil des äußeren Rings (16f, 16g) ausgebildet ist;
einen säulenförmigen Ankerstift (26, 26a), wobei, wenn er in das Lagerloch (28, 28a) pressgepasst und darin befestigt ist, ein Teil des Ankerstifts (26, 26a) von der Innenfläche des konkaven Abschnitts (23e, 23f) des äußeren Rings (16f, 16g) vorsteht; und
eine Ankernut (27), die an der zylindrischen konkaven Oberfläche (22e) des Trägerbalkenabschnitts (9f) des einen Zapfens (7f) in der Umfangsrichtung der zylindrischen konkaven Oberfläche (22e) ausgebildet ist und mit einem Teil des Ankerstifts (26, 26a) in Eingriff steht.

12. Stufenlos variables Toroidgetriebe nach Anspruch 11, wobei
das Lagerloch (28) an einer Stelle ausgebildet ist, die in Bezug auf die Mittelachse des konkaven Abschnitts (23e) in einem rechten Winkel zur Richtung dieser Mittelachse torsionsverlagert ist, und der mittlere Abschnitt des Lagerlochs (28) im in der Breitenrichtung des konkaven Abschnitts (23e) mittleren Abschnitt offen ist;
der Ankerstift (26) so ist, dass dann, wenn seine Abschnitte in der Nähe beider Endabschnitte in der axialen Richtung durch Presspassung in das Lagerloch (28) gepasst und darin befestigt sind, der in der axialen Richtung des Ankerstifts (26) mittlere Abschnitt einem Teil des konkaven Abschnitts (23e) gegenüber freiliegt;
die Ankernut (27) einen kreisbogenförmigen Querschnitt aufweist und mit dem in der axialen Richtung mittleren Abschnitt des Ankerstifts (26) so zusammenpasst, dass keine Vibration oder Bewegung stattfindet; und
zusammen damit, dass die Außenumfangsfläche an beiden Enden des äußeren Rings (16f) einen Teil des Zapfens (7f) in der axialen Richtung des Trägerbalkenabschnitts (9f) des Zapfens (7f) bildet, der Eingriffsabschnitt zwischen dem in der axialen Richtung mittleren Abschnitt des Ankerstifts (26) und der Ankernut (27) den Drehmomentstützungsabschnitt bildet.

13. Stufenlos variables Toroidgetriebe nach Anspruch 11, wobei
Lagerlöcher (28a) an zwei Stellen in der Breitenrichtung des konkaven Abschnitts (23f) an Positionen ausgebildet sind, die in der axialen Richtung der Mittelachse des konkaven Abschnitts (23f) zusammenfallen; und
ein Ankerstift (26a) in jedes der Lagerlöcher (28a) so pressgepasst ist, dass der Endabschnitt von jedem Ankerstift (26a) von der Innenfläche des konkaven Abschnitts (23f) vorsteht.

## Revendications

1. Transmission à variation continue toroïdale, comprenant :
des disques d'entrée et de sortie (2, 5) qui sont supportés de manière concentrique de manière à être capables d'entrer en rotation librement l'un par rapport à l'autre ;
une pluralité de pivots (7f), chacun comprenant : une paire d'arbres de basculement (8b) qui sont prévus de manière concentrique sur les deux sections d'extrémité du pivot (7f) et ayant un axe central qui est dans une position décalée par torsion par rapport à l'axe central du disque d'entrée et de sortie (2, 5) ; et une section formant poutre de support (9f) qui s'étend entre ces arbres de basculement (8b), et comprend une surface latérale sur l'intérieur dans la direction radiale des disques d'entrée et de sortie (2, 5), la surface latérale composée d'une surface convexe cylindrique (22e) ayant un axe central qui est parallèle à l'axe central des arbres de basculement (8b) et qui est situé plus à l'extérieur dans la direction radiale des disques d'entrée et de sortie (2, 5) que l'axe central des arbres de basculement (8b) ; et est prévu entre les disques d'entrée et de sortie (2, 5) dans la direction axiale de ces disques, et peut se déplacer de manière pivotante librement autour de l'axe central de la paire d'arbres de basculement (8b),
une pluralité de rouleaux moteurs (6a) qui sont maintenus entre les disques d'entrée et de sortie (2, 5) et comprennent une surface latérale sur l'extérieur dans la direction radiale des disques d'entrée et de sortie (2, 5) sur laquelle un chemin de roulement interne (15) est formé ; et
une pluralité de paliers à roulement de butée (13a) qui comprennent : une bague externe (16f, 16g) qui a une section concave (23e, 23f) formée sur l'extérieur dans la direction radiale du disque d'entrée et de sortie (2, 5) et peut être ajustée avec la surface convexe cylindrique (22e) de la section formant poutre de support (9f), et une surface latérale sur l'intérieur dans la direction radiale du disque d'entrée et de sortie (2, 5) et sur laquelle un chemin de roulement externe (17) est formé ; et une pluralité de corps roulants (18) qui sont situés entre le chemin de roulement externe (17) de cette bague externe (16f, 16g) et le chemin de roulement interne (15) du rouleau moteur (6a) de manière à être capables de rouler librement ;
moyennant quoi
chacun des paliers à roulement de butée (13a) est supporté par chacun des pivots (7f) avec la section concave (23e, 23f) ajustée avec la surface convexe cylindrique (22e) de la section formant poutre de support (7f) de telle sorte que le déplacement par pivotement dans la direction axiale des disques d'entrée et de sortie (2, 5) est possible, et chacun des rouleaux moteurs (6a) est supporté sur l'intérieur dans la direction radiale des disques d'entrée et de sortie (2, 5) de chacun du pivot (7f) au moyen du palier à roulement de butée (13a) de manière à être capable d'entrer en rotation librement ; **caractérisée en ce que**
chacune des bagues externes (16f, 16g) est dotée d'un trou de support (28, 28a) ayant une section transversale circulaire et formé dans une partie de chacune des bagues externes (16f, 16g), et un goujon d'ancrage en forme de colonne (26, 26a) qui est inséré dans et fixé à l'intérieur du trou de support (28, 28a) avec un ajustement avec serrage, avec une partie faisant saillie de la surface intérieure de la section concave (23e, 23f) de chacune des bagues externes (16f, 16g) ; et la section formant poutre de support (9f) de chacun des pivots (7f) étant dotée d'une rainure d'ancrage (27) qui est formée sur les surfaces convexes cylindriques (22e) dans la direction circonférentielle de celle-ci ; et la partie du goujon d'ancrage (26, 26a) et la rainure d'ancrage (27) sont mises en prise de telle sorte qu'un couple qui est appliqué sur le rouleau moteur (6a) au fur et à mesure que les disques d'entrée et de sortie (2, 5) sont entraînés en rotation peut être supporté par la section de mise en prise entre le goujon d'ancrage (26, 26a) et la rainure d'ancrage (27).

2. Transmission à variation continue toroïdale selon la revendication 1, dans laquelle
le trou de support (28) est formé dans une position décalée par torsion autour de l'axe central de la section concave (23e) selon un angle droit par rapport à la direction de cet axe central, et la section médiane du trou de support (28) est ouverte dans la section médiane dans la direction de la largeur de la section concave (23e) ;
le goujon d'ancrage (26) est tel qu'avec les parties proches des deux sections d'extrémité dans la direction axiale ajustées et fixées à l'intérieur du trou de support (28) avec un ajustement avec serrage, la section médiane dans la direction axiale du goujon d'ancrage (26) est exposée à une partie de la section concave (23e) ;
la rainure d'ancrage (27) a une section transversale en forme d'arc circulaire et s'ajuste avec la section médiane dans la direction axiale du goujon d'ancrage (26) de sorte qu'il n'y a pas de vibration ou de mouvement ; et
conjointement avec la séparation de la surface circonférentielle externe sur les deux extrémités de la bague externe (16f) à partir d'une partie du pivot (7f) dans la direction axiale de la section formant poutre de support (9f) du pivot (7f), un couple qui est appliqué sur le rouleau moteur (6a) au fur et à mesure que les disques d'entrée et de sortie (2, 5) sont entraînés en rotation est supporté par la section de mise en prise entre la section médiane dans la direction axiale du goujon d'ancrage (26) et la rainure d'ancrage (27).

3. Transmission à variation continue toroïdale selon la revendication 2, dans laquelle
un arbre de support (12a) qui est concentrique avec le chemin de roulement externe (17) est formé d'un seul tenant avec la bague externe (16f) dans la section centrale de la surface interne de la bague interne (16f) ;
le rouleau moteur (6a) est prévu autour de cet arbre de support (12a) de manière à être capable d'être entraîné en rotation librement au moyen d'un palier de roulement de butée à aiguilles (24) ;
de l'huile de graissage peut être acheminée jusqu'à un canal d'huile de graissage côté aval (29) qui est formé dans la section centrale de l'arbre de support (12a) à partir d'un canal d'huile de graissage côté amont (30) qui est formé dans la section formant poutre de support (9f) du pivot (7f) ;
le trou de support (28) et la rainure d'ancrage (27) sont formés dans des positions qui sont séparées du centre de l'arbre de support (12a) dans la direction axiale de la section formant poutre de support (9f) ; et
la section médiane dans la direction axiale du goujon d'ancrage (26) existe dans une partie qui est séparée de la section de raccordement entre le canal d'huile de graissage côté aval (29) et le canal d'huile de graissage côté amont (30).

4. Transmission à variation continue toroïdale selon la revendication 1, dans laquelle
les trous de support (28a) sont formés au niveau de deux emplacements dans la direction de la largeur de la section concave (23f) dans des positions dans la direction axiale de l'axe central de la section concave (23f) qui coïncident entre elles ; et
un goujon d'ancrage (26a) est ajusté par pression dans chaque trou de support (28a) de telle sorte que la section d'extrémité de chaque goujon d'ancrage (26a) fait saillie de la surface interne de la section concave (23f).

5. Transmission à variation continue toroïdale comprenant :
des disques d'entrée et de sortie (2, 5) qui sont supportés de manière concentrique de manière à être capables d'entrer en rotation librement l'un par rapport à l'autre ;
une pluralité de pivots (7a, 7g), chacun comprenant : une paire d'arbres de basculement (8b) qui sont prévus de manière concentrique sur les deux sections d'extrémité du pivot (7a, 7g) et ayant un axe central qui est dans une position décalée par torsion par rapport à l'axe central du disque d'entrée et de sortie (2, 5) ; et une section formant poutre de support (9a, 9g) qui s'étend entre ces arbres de basculement (8b), et comprend une surface latérale sur l'intérieur dans la direction radiale des disques d'entrée et de sortie (2, 5), la surface latérale étant composée d'une surface convexe cylindrique (22) ayant un axe central qui est parallèle à l'axe central des arbres de basculement (8b) et qui est situé plus à l'extérieur dans la direction radiale des disques d'entrée et de sortie (2, 5) que l'axe central des arbres de basculement (8b) ; et est prévu entre les disques d'entrée et de sortie (2, 5) dans la direction axiale de ces disques, et peut se déplacer de manière pivotante librement autour de l'axe central de la paire d'arbres de basculement (8b),
une pluralité de rouleaux moteurs (6a) qui sont maintenus entre les disques d'entrée et de sortie (2, 5), et comprennent une surface latérale sur l'extérieur dans la direction radiale des disques d'entrée et de sortie (2, 5) sur laquelle un chemin de roulement interne (15) est formé ; et
une pluralité de paliers à roulement de butée (13a) qui comprennent : une bague externe (16h-16k) qui a une section concave (23) formée sur l'extérieur dans la direction radiale du disque d'entrée et de sortie (2, 5) et peut être ajustée avec la surface convexe cylindrique (22) de la section formant poutre de support (9a, 9g), et une surface latérale sur l'intérieur dans la direction radiale du disque d'entrée et de sortie (2, 5) et sur laquelle un chemin de roulement externe (17) est formé ; et une pluralité de corps roulants (18) qui sont situés entre le chemin de roulement externe (17) de cette bague externe (16h-16k) et le chemin de roulement interne (15) du rouleau moteur (6a) de manière à être capables de rouler librement ;
moyennant quoi
chacun des rouleaux moteurs (6a) est supporté sur l'intérieur dans la direction radiale des disques d'entrée et de sortie (2, 5) de chacun des pivots (7a, 7g) au moyen du palier à roulement de butée (13a), et chacun des paliers à roulement de butée (13a) est supporté par chacun des pivots (7a, 7g) avec la section concave (23) ajustée avec la surface convexe cylindrique (22) de la section formant poutre de support (9a, 9g) et avec une partie de la surface circonférentielle externe de celle-ci mise en prise avec des surfaces échelonnées (25) qui sont formées dans une partie du pivot (7a, 7g) sur les deux côtés de la surface convexe cylindrique (22) de telle sorte que le déplacement par pivotement dans la direction axiale des disques d'entrée et de sortie (2, 5) est possible et un couple qui est appliqué sur le rouleau moteur (6a) au fur et à mesure que les disques sont entraînés en rotation peut être supporté ; **caractérisée en ce que**
l'espace entre la paire de surfaces échelonnées (25) qui sont formées dans chaque pivot (7a, 7g) est plus grand que le diamètre externe de la bague externe (16h-16k), un élément élastique (41a, 41b, 42a, 42b) est agencé dans la partie entre l'une des surfaces échelonnées (25) et la surface circonférentielle externe de la bague externe (16h-16k), et cet élément élastique (41a, 41b, 42a, 42b) pousse la bague externe (16h-16k) vers l'autre surface échelonnée (25).

6. Transmission à variation continue toroïdale selon la revendication 5, dans laquelle
l'élément élastique est un ressort à lames (42a, 42b) qui est formé en courbant une lame métallique élastique en une forme d'arc partiel ;
une section concave de support (43, 43a) est formée dans une partie de la surface circonférentielle externe de la bague externe (16i) qui fait face à l'une surface échelonnée (25), cette section concave de support (43, 43a) étant creusée davantage dans la direction radiale que les parties adjacentes dans la direction circonférentielle jusqu'à une profondeur plus superficielle que l'épaisseur du ressort à lames (42a, 42b) à l'état libre, et est plus profonde que l'épaisseur de la lame métallique élastique ; et
le ressort à lames (42a, 42b) est placé dans cette section concave de support (43, 43a).

7. Transmission à variation continue toroïdale selon la revendication 5, dans laquelle
l'élément élastique est un ressort à lames (42a, 42b) qui est formé en courbant une lame métallique élastique en une forme d'arc circulaire partiel ;
il y a un support de ressort (44, 44a) ayant une section concave de support (43a) sur une surface qui est plus superficielle que l'épaisseur du ressort à lames (42a, 42b) à l'état libre, et plus profonde que l'épaisseur de la lame métallique élastique ;
une surface plate (45, 45a) est formée sur une partie de la surface circonférentielle externe de la bague externe (16j, 16k) qui fait face à l'une surface échelonnée (25), et s'étend dans la direction tangentielle de cette partie ;
l'autre surface du support de ressort (44, 44a) entre en contact avec cette surface plate (25) ; et
le ressort à lames (42a, 42b) est placé à l'intérieur de la section concave de support.

8. Transmission à variation continue toroïdale selon la revendication 5, dans laquelle un organe de pression (31) est agencé dans une partie entre au moins l'une surface échelonnée (25) et la surface circonférentielle externe de la bague externe (16h), de telle sorte que l'élément élastique (41a, 41b) pousse cet organe de pression (31) vers la bague externe (16h).

9. Transmission à variation continue toroïdale, comprenant :
des disques d'entrée et de sortie (2, 5) qui sont supportés de manière concentrique de manière à être capables d'être entraînés en rotation l'un par rapport à l'autre ;
une pluralité de pivots (7a, 7g), chacun comprenant : une paire d'arbres de basculement (8b) qui sont prévus de manière concentrique sur les deux sections d'extrémité du pivot (7a, 7g) et ayant un axe central qui est dans une position décalée par torsion par rapport à l'axe central du disque d'entrée et de sortie (2, 5) ; et une section formant poutre de support (9a, 9g) qui s'étend entre ces arbres de basculement (8b), et comprend une surface latérale sur l'intérieur dans la direction radiale des disques d'entrée et de sortie (2, 5), la surface latérale composée d'une surface convexe cylindrique (22) ayant un axe central qui est parallèle à l'axe central des arbres de basculement (8b) et qui est situé plus à l'extérieur dans la direction radiale des disques d'entrée et de sortie (2, 5) que l'axe central des arbres de basculement (8b) ; et est prévu entre les disques d'entrée et de sortie (2, 5) dans la direction axiale de ces disques, et peut se déplacer de manière pivotante librement autour de l'axe central de la paire d'arbres de basculement (8b),
une pluralité de rouleaux moteurs (6a) qui sont maintenus entre les disques d'entrée et de sortie (2, 5), et comprennent une surface latérale sur l'extérieur dans la direction radiale des disques d'entrée et de sortie (2, 5) sur laquelle un chemin de roulement interne (15) est formé ; et
une pluralité de paliers à roulement de butée (13a) qui comprennent : une bague externe (16a, 16h) qui a une section concave (23) formée sur l'extérieur dans la direction radiale du disque d'entrée et de sortie (2, 5) et peut être ajustée avec la surface convexe cylindrique (22) de la section formant poutre de support (9a, 9g), et une surface latérale sur l'intérieur dans la direction radiale du disque d'entrée et de sortie (2, 5) et sur laquelle un chemin de roulement externe (17) est formé ; et une pluralité de corps roulants (18) qui sont situés entre le chemin de roulement externe (17) de cette bague externe (16a, 16h) et le chemin de roulement interne (15) du rouleau moteur (6a) de manière à être capables de rouler librement ;
moyennant quoi
chacun des paliers à roulement de butée (13a) est supporté par chacun des pivots (7a, 7g) avec la section concave (23) ajustée avec la surface convexe cylindrique (22) de la section formant poutre de support (9a, 9g) de telle sorte que le déplacement par pivotement dans la direction axiale des disques d'entrée et de sortie (2, 5) est possible, et chacun des rouleaux moteurs (6a) est supporté sur l'intérieur dans la direction radiale des disques d'entrée et de sortie (2, 5) de chacun du pivot (7a, 7g) au moyen du palier à roulement de butée (13a) de manière à être capable d'être entraîné en rotation librement ;
l'ajustement du rapport de transmission entre les disques d'entrée et de sortie (2, 5) est effectué par un actionneur (21) prévu pour chaque pivot (7a, 7g) amenant le pivot (7a, 7g) à se déplacer dans la direction axiale des arbres de basculement (8b), et amenant le pivot (7a, 7g) à se déplacer de manière pivotante autour des arbres de basculement (8b) ;
les angles d'inclinaison des pivots (7a, 7g) autour des arbres de basculement (8b), qui sont liés au rapport de transmission, sont commandés par des vannes de commande de rapport de transmission (46) qui commandent l'approvisionnement en huile hydraulique des actionneurs (21), et l'ajustement de l'état ouvert/fermé des vannes de commande de rapport de transmission (46) est effectué en transmettant le déplacement de l'un de la pluralité de pivots (7a, 7g) aux éléments composants de ces vannes de commande de rapport de transmission (46) ;
l'espace entre la paire de surfaces échelonnées (25) qui sont formées dans chaque pivot (7a, 7g) sur les deux sections d'extrémité dans la direction axiale de la section formant poutre de support (9a, 9g) du pivot (7a, 7g) est plus grand que la dimension dans la même direction de la bague externe (16a, 16h) ;
**caractérisée en ce que**
une section de support de couple est formée uniquement entre l'un de la pluralité de pivots (7a, 7g) et la bague externe (16a, 16h) qui est supportée par ce pivot (7a, 7g) de manière à être capable de se déplacer de manière pivotante, la section de support de couple supportant le couple qui est appliqué sur le rouleau moteur (6a) qui est supporté par ce pivot (7a, 7g) au fur et à mesure que les disques d'entrée et de sortie (2, 5) sont entraînés en rotation en permettant le déplacement par pivotement de cette bague externe (16a, 16h) par rapport à la section formant poutre de support (9a, 9g) de ce pivot (7a, 7g) et empêchant cette bague externe (16a, 16h) de se déplacer dans une direction axiale de cette section formant poutre de support (9a, 9g) et rendant le déplacement de la bague externe (16a, 16h) dans l'autre direction axiale de la section formant poutre de support (9a, 9g) par rapport au pivot (7a, 7g) difficile ; et
un organe de pression (31) et un élément élastique (41a) sont installés dans l'un pivot (7g) dans la partie entre l'une des surface échelonnées (25) et la surface circonférentielle externe de la bague externe (16h), et la section de support de couple est l'autre surface échelonnée (25) ou un élément (32) qui est installé sur l'autre surface échelonnée (25), et pousse l'organe de pression (31) vers la bague externe (16h) par l'élément élastique (41a).

10. Transmission à variation continue toroïdale selon la revendication 9, dans laquelle
un organe d'ancrage (32) ayant la même forme que l'organe de pression (31) est prévu dans l'un pivot (7g) entre l'autre surface échelonnée (25) et la surface circonférentielle externe de la bague externe (16h) en tant qu'élément qui est installé sur l'autre surface échelonnée (25) ;
des trous de support concentriques (38a, 38b) sont formés dans chaque surface échelonnée (25) ;
chacun de l'organe de pression (31) et de l'organe d'ancrage (32) comprend une section principale (33) qui est située entre la surface échelonnée (25) et la surface circonférentielle externe de la bague externe (16h), et une section convexe (34) qui fait saillie de la section principale (33) sur la surface opposée au rouleau moteur (6a) ; et
la section convexe (34) de l'organe de pression (31) et l'organe d'ancrage (32) sont ajustés à l'intérieur des trous de support (38a, 38b), de telle sorte que l'élément élastique (41a) qui est monté à l'intérieur d'un des trous de support (38a) pousse l'organe de pression (31) contre la surface circonférentielle externe de la bague externe (16h), ce qui pousse la bague externe (16h) vers l'organe d'ancrage (32) ; et
la zone de contact entre la surface circonférentielle externe de la bague externe (16h) et l'organe d'ancrage (32) forment la section de support de couple.

11. Transmission à variation continue toroïdale, comprenant :
des disques d'entrée et de sortie (2, 5) qui sont supportés de manière concentrique de manière à être capables d'être entraînés en rotation l'un par rapport à l'autre ;
une pluralité de pivots (7a, 7f), chacun comprenant : une paire d'arbres de basculement (8b) qui sont prévus de manière concentrique sur les deux sections d'extrémité du pivot (7a, 7f) et ayant un axe central qui est dans une position décalée par torsion par rapport à l'axe central du disque d'entrée et de sortie (2, 5) ; et une section formant poutre de support (9a, 9f) qui s'étend entre ces arbres de basculement (8b), et comprend une surface latérale sur l'intérieur dans la direction radiale des disques d'entrée et de sortie (2, 5), la surface latérale composée d'une surface convexe cylindrique (22, 22e) ayant un axe central qui est parallèle à l'axe central des arbres de basculement (8b) et qui est situé plus à l'extérieur dans la direction radiale des disques d'entrée et de sortie (2, 5) que l'axe central des arbres de basculement (8b) ; et est prévu entre les disques d'entrée et de sortie (2, 5) dans la direction axiale de ces disques, et peut se déplacer de manière pivotante librement autour de l'axe central de la paire d'arbres de basculement (8b),
une pluralité de rouleaux moteurs (6a) qui sont maintenus entre les disques d'entrée et de sortie (2, 5), et comprennent une surface latérale sur l'extérieur dans la direction radiale des disques d'entrée et de sortie (2, 5) sur laquelle un chemin de roulement interne (15) est formé ; et
une pluralité de paliers à roulement de butée (13a) qui comprennent : une bague externe (16a, 16f, 16g) qui a une section concave (23, 23e, 23f) formée sur l'extérieur dans la direction radiale du disque d'entrée et de sortie (2, 5) et peut être ajustée avec la surface convexe cylindrique (22, 22e) de la section formant poutre de support (9a, 9f), et une surface latérale sur l'intérieur dans la direction radiale du disque d'entrée et de sortie (2, 5) et sur laquelle un chemin de roulement externe (17) est formé ; et une pluralité de corps roulants (18) qui sont situés entre le chemin de roulement externe (17) de cette bague externe (16a, 16f, 16g) et le chemin de roulement interne (15) du rouleau moteur (6a) de manière à être capables de rouler librement ;
moyennant quoi
chacun des paliers à roulement de butée (13a) est supporté par chacun des pivots (7a, 7f) avec la section concave (23, 23e, 23f) ajustée avec la surface convexe cylindrique (22, 22e) de la section formant poutre de support (9a, 9f) de telle sorte que le déplacement par pivotement dans la direction axiale des disques d'entrée et de sortie (2, 5) est possible, et chacun des rouleaux moteurs (6a) est supporté sur l'intérieur dans la direction radiale des disques d'entrée et de sortie (2, 5) de chacun du pivot (7a, 7f) au moyen du palier à roulement de butée (13a) de manière à être capable d'être entraîné en rotation librement ;
l'ajustement du rapport de transmission entre les disques d'entrée et de sortie (2, 5) est effectué par un actionneur (21) prévu pour chaque pivot (7a, 7f) amenant le pivot (7a, 7f) à se déplacer dans la direction axiale des arbres de basculement (8b), et amenant le pivot (7a, 7f) à se déplacer de manière pivotante autour des arbres de basculement (8b) ;
les angles d'inclinaison des pivots (7a, 7f) autour des arbres de basculement (8b), qui sont liés au rapport de transmission, sont commandés par des vannes de commande de rapport de transmission (46) qui commandent l'approvisionnement en huile hydraulique des actionneurs (21), et l'ajustement de l'état ouvert/fermé des vannes de commande de rapport de transmission (46) est effectué en transmettant le déplacement de l'un de la pluralité de pivots (7a, 7f) aux éléments composants de ces vannes de commande de rapport de transmission (46) ;
l'espace entre la paire de surfaces échelonnées (25) qui sont formées dans chaque pivot (7a, 7f) sur les deux sections d'extrémité dans la direction axiale de la section formant poutre de support (9a, 9f) du pivot (7a, 7f) est plus grand que la dimension dans la même direction de la bague externe (16a, 16f, 16g) ;
**caractérisée en ce que**
une section de support de couple est formée uniquement entre l'un de la pluralité de pivots (7a, 7f) et la bague externe (16a, 16f, 16g) qui est supportée par ce pivot (7a, 7f) de manière à être capable de se déplacer de manière pivotante, la section de support de couple supportant le couple qui est appliqué sur le rouleau moteur (6a) qui est supporté par ce pivot (7a, 7f) au fur et à mesure que les disques d'entrée et de sortie (2, 5) sont entraînés en rotation en permettant le déplacement par pivotement de cette bague externe (16a, 16f, 16g) par rapport à la section formant poutre de support (9a, 9f) de ce pivot (7a, 7f) et empêchant cette bague externe (16a, 16f, 16g) de se déplacer dans une direction axiale de cette section formant poutre de support (9a, 9f)
et
la section de support de couple comprend :
un trou de support (28, 28a) ayant une section transversale circulaire qui est formée dans une partie de la bague externe (16f, 16g) ;
un goujon d'ancrage en forme de colonne (26, 26a) qui, lorsqu'il est ajusté et fixé à l'intérieur du trou de support (28, 28a) avec un ajustement avec serrage, une partie du goujon d'ancrage (26, 26a) fait saillie de la surface intérieure de la section concave (23e, 23f) de la bague externe (16f, 16g) ; et
une rainure d'ancrage (27) qui est formée sur la surface convexe cylindrique (22e) de la section formant poutre de support (9f) de l'un pivot (7f) dans la direction circonférentielle de la surface convexe cylindrique (22e), et se met en prise avec une partie du goujon d'ancrage (26, 26a).

12. Transmission à variation continue toroïdale selon la revendication 11, dans laquelle
le trou de support (28) est formé dans une position décalée par torsion par rapport à l'axe central de la section concave (23e) selon un angle droit par rapport à la direction de cet axe central, et la section médiane du trou de support (28) est ouverte dans la section médiane dans la direction de la largeur de la section concave (23e) ;
le goujon d'ancrage (26) est tel que, avec les parties proches des deux sections d'extrémité dans la direction axiale ajustées et fixées à l'intérieur du trou de support (28) avec un ajustement avec serrage, la section médiane dans la direction axiale du goujon d'ancrage (26) est exposée à une partie de la section concave (23e) ;
la rainure d'ancrage (27) a une section transversale en forme d'arc circulaire et est ajustée avec la section médiane dans la direction axiale du goujon d'ancrage (26) de sorte qu'il n'y a pas de vibration ou de mouvement ; et
conjointement avec la séparation de la surface circonférentielle externe sur les deux extrémités de la bague externe (16f) à partir d'une partie du pivot (7f) dans la direction axiale de la section formant poutre de support (9f) du pivot (7f), la section de mise en prise entre la section médiane dans la direction axiale du goujon d'ancrage (26) et la rainure d'ancrage (27) forment la section de support de couple.

13. Transmission à variation continue toroïdale selon la revendication 11, dans laquelle
des trous de support (28a) sont formés dans deux emplacements dans la direction de la largeur de la section concave (23f) dans des positions dans la direction axiale de l'axe central de la section concave (23f) qui coïncident entre elles ; et
un goujon d'ancrage (26a) est ajusté par pression dans chaque trou de support (28a) de telle sorte que la section d'extrémité de chaque goujon d'ancrage (26a) fait saillie de la surface interne de la section concave (23f).
